# EUROPEAN PATENT APPLICATION

(11) **EP 3 954 588 A1**
(43) Date of publication of application: **16.02.2022**
(21) Application number: 19923929.4
(22) Date of filing: 12.04.2019
(51) Int. Cl.: B60R 25/24, B60R 25/33

(54) **VEHICLE REMOTE CONTROL SYSTEM, IN-VEHICLE DEVICE OR COMMUNICATION MODULE, VEHICLE, SERVER, VEHICLE REMOTE CONTROL METHOD, VEHICLE REMOTE CONTROL PROGRAM, AND STORAGE MEDIUM**

(71) Applicant: Global Mobility Service, Inc., Tokyo 105-0012 (JP)
(72) Inventor: NAKASHIMA Tokushi, Tokyo 105-0012 (JP); KAWAGUCHI Fumichika, Tokyo 105-0012 (JP)
(74) Representative: Hoffmann Eitle
(86) International application number: PCT/JP2019/016060
(87) International publication number: WO 2020/208830

(57) **Abstract**

A vehicle remote reservation control system capable of switching a vehicle to a starting-disabled state even when communication between a server and a vehicle-mounted device is not established is provided.

A vehicle starting control system comprises: a server for managing a starting state of a vehicle; and a vehicle-mounted device or a communication module for controlling the starting state of the vehicle based on a control command that is provided from the server and controls the starting state of the vehicle, and is characterized in that the control command includes at least a starting state reservation control command for switching between a starting-disabled state and a starting-enabled state of the vehicle, and when the vehicle-mounted device or the communication module is provided with the control command from the server, if a predetermined condition regarding the starting state reservation control command is satisfied on the basis of vehicle information detected by a vehicle information detecting means, the vehicle-mounted device or the communication module switches the starting state of the vehicle.

## Description

### Technical Field

The present invention relates to a vehicle remote control system, a vehicle-mounted device or a communication module, a vehicle, a server, a vehicle remote control method, a vehicle remote control program and a storage medium.

### Background Art

In the conventional automobile distribution and leasing industry, people have been unable to obtain vehicles without passing strict finance credit screening. Nowadays, a service has been proposed to users who have the ability to pay but fail to pass a conventional credit screening. This service eliminates credit screening but provides a vehicle and, if the charge (for example, monthly fee) is not paid within a predetermined time limit, remotely stops the vehicle and specifies the vehicle position for vehicle retrieval.

An example of a system for implementing such a service is disclosed in Patent Literature 1, in which a vehicle is equipped with a vehicle-mounted device with a remote control function, and this vehicle-mounted device is connected to a network so that a server remotely controls the vehicle or a server acquires information on the vehicle. Such a vehicle connected to a network is called a "connected car". In this system, if the user has not paid the usage fee within the specified time limit, or if theft of the vehicle is detected, the vehicle is restricted from starting by a command from the server when conditions such as
- the current position of the vehicle is at a specific location or within a specific range
- the vehicle engine is not running
- a certain amount of time has passed since the vehicle was parked and stopped are satisfied.

Further, in Patent Literature 2, as a remote control system for auto loan and auto lease, a system is disclosed, in which the relay switch device is controlled so that the engine of the target vehicle cannot be started if the loan fee or lease fee has not been paid, and in which the relay switch device is controlled so that, when an antenna for transmission and reception or the GPS antenna is removed, the engine is locked not to be able to be started.

Further, in Patent Literature 3, a vehicle remote control system is disclosed, in which the system comprises a vehicle-mounted device including a relay input/output means for controlling an external relay that switches between a starting-disabled state and a starting-enabled state of a vehicle and a vehicle information-associated control means for controlling an external relay based on the relay control command, wherein the vehicle information-associated control means determines whether or not to adopt a relay control command based on the elapsed time from a change of a on/off state of vehicle power detected by the vehicle information detection means.

Further, in Patent Literature 4, a vehicle starting control system is disclosed, in which the time lag from the user payment of the charge to the release of vehicle starting restriction can be shortened.

### [Citation List]

### [Patent Literature]

Patent Literature 1: WO2016/167350A1
Patent Literature 2: Japanese Patent Laid-Open No. 2014-146120
Patent Literature 3: Japanese Patent Application No. 6238038
Patent Literature 4: Japanese Patent Application No. 6476407

### Summary of Invention

### Technical Problem

In Patent Literature 1, mobile phones, Wi-Fi, beacons and the like are exemplified as communication methods between the server and the vehicle-mounted device. However, there is no description how to deal with a situation where communication between the server and the vehicle-mounted device cannot be established.

In Patent Literature 2, 3G, 4G, the Internet and the like are exemplified as communication methods between the server and the start/update controller. However, there is no description how to deal with a situation where communication between the server and the start/update controller cannot be established.

Thus, the systems in Patent Literature 1 and Patent Literature 2 cannot perform accurate vehicle remote control. In Patent Literature 3, when communication between the server and the vehicle-mounted device is established, the vehicle is switched to the starting-disabled state if a predetermined condition by the vehicle information-associated control means is satisfied on the basis of the relay control command from the server for switching the vehicle to the starting-disabled state. On the other hand, If communication between the server and the vehicle-mounted device is not established, the vehicle-mounted device does not control to switch the vehicle to the starting-disabled state. Thereby, in Patent Literature 3, in a case where the vehicle cannot establish communication between the server and the vehicle-mounted device, it is possible to avoid a situation in which the vehicle cannot be switched to the starting-enabled state when a user pays a predetermined fee.

However, in the remote control system in Patent Literature 3, in a case where the vehicle is parked in an area of poor communication condition, an underground parking lot, or the like, the vehicle cannot be switched to the starting-disabled state. For this reason, there is a problem that the user can continue to use the vehicle without paying a predetermined fee.

The present inventor has diligently studied these problems and taken into account that the vehicle can be safely switched to the starting-disabled state according to the vehicle information-associated control and communication status, the situation where the starting-enabled state continues without paying the predetermined fee is prevented, user convenience is ensured, and the like. Additionally, the present inventor applied the vehicle starting control system regarding the release of the starting restriction in Patent Literature 4 to complete the present invention.

An object of the presentinvention is to provide a vehicle remote reservation control system capable of switching a vehicle to the starting-disabled state even when communication between the server and the vehicle-mounted device is not established.

Further, another object of the present invention is that the server can transmit the starting state control command to the vehicle-mounted device at any time regardless of the state of the vehicle, so that the vehicle management in the server can be simplified.

### Solution to Problem

The above objects of the present invention can be achieved by the following configurations. That is to say, a vehicle remote control system of the first aspect of the present invention comprises: a server for managing a starting state of a vehicle; and
a vehicle-mounted device or a communication module for controlling the starting state of the vehicle based on a control command that is provided from the server and controls the starting state of the vehicle, and is characterized in that
the control command includes at least a starting state reservation control command for switching between a starting-disabled state and a starting-enabled state of the vehicle, and
when the vehicle-mounted device or the communication module is provided with the control command from the server, if a predetermined condition regarding the starting state reservation control command is satisfied on the basis of vehicle information detected by a vehicle information detecting means, the vehicle-mounted device or the communication module switches the starting state of the vehicle.

A vehicle remote control system of the second aspect of the present invention is characterized in that, in the vehicle remote control system of the first aspect, the starting state reservation control command includes at least one of
(2-1) a switching command from the starting-disabled state to the starting-enabled state,
(2-2) a switching command from the starting-enabled state to the starting-disabled state,
(2-3) position reservation information about a position of the vehicle where the starting state is to be switched, or
(2-4) time reservation information about time when the starting state is to be switched.

A vehicle remote control system of the third aspect of the present invention is characterized in that, in the vehicle remote control system of the first or second aspect, the server is connected via a predetermined interface of a financial system.

A vehicle remote control system of the fourth aspect of the present invention is characterized in that, in the vehicle remote control system of any one of the first to third aspects, the server can communicate the control command for controlling the starting state of the vehicle with at least one of
(4-1) the vehicle-mounted device or the communication module,
(4-2) the mobile terminal, or
(4-3) the IC card, and
   the mobile terminal and/or the IC card can communicate the control command with the vehicle-mounted device or the communication module.

A vehicle remote control system of the fifth aspect of the present invention is characterized in that, in the vehicle remote control system of any one of the first to fourth aspects, the starting state to be controlled of the vehicle includes at least one of a door lock state of the vehicle, an engine starting state of the vehicle, a state of an immobilizer of the vehicle, or a state of a push button for starting the vehicle.

A vehicle remote control system of the sixth aspect of the present invention is characterized in that, in the vehicle remote control system of any one of the first to fifth aspects, the vehicle-mounted device or the communication module controls the starting state of the vehicle based on at least elapsed time from a change of on/off state of vehicle power, which is detected by the vehicle information detecting means.

A vehicle remote control system of the seventh aspect of the present invention is characterized in that, in the vehicle remote control system of any one of the first to sixth aspects, the vehicle-mounted device controls the starting state of the vehicle by controlling an external relay.

A vehicle-mounted device or a communication module of the eighth aspect of the present invention is for controlling a starting state of a vehicle based on a control command that is provided from a server for managing the starting state of the vehicle and controls the starting state of the vehicle, and is characterized in that
the control command includes at least a starting state reservation control command for switching between a starting-disabled state and a starting-enabled state of the vehicle, and
when the vehicle-mounted device or the communication module is provided with the control command from the server, if a predetermined condition regarding the starting state reservation control command is satisfied on the basis of vehicle information detected by a vehicle information detecting means, the vehicle-mounted device or the communication module switches the starting state of the vehicle.

A vehicle-mounted device or a communication module of the ninth aspect of the present invention is characterized in that, in the vehicle-mounted device or the communication module of the eighth aspect, the starting state reservation control command includes at least one of
(9-1) a switching command from the starting-disabled state to the starting-enabled state,
(9-2) a switching command from the starting-enabled state to the starting-disabled state,
(9-3) position reservation information about a position of the vehicle where the starting state is to be switched, or
(9-4) time reservation information about time when the starting state is to be switched.

A vehicle-mounted device or a communication module of the tenth aspect of the present invention is characterized in that, in the vehicle-mounted device or the communication module of the eighth or ninth aspect, the server is connected via a predetermined interface of a financial system.

A vehicle-mounted device or a communication module of the eleventh aspect of the present invention is characterized in that, in the vehicle-mounted device or the communication module of any one of the eighth to tenth aspects, the server can communicate the control command for controlling the starting state of the vehicle with at least one of
(11-1) the vehicle-mounted device or the communication module,
(11-2) the mobile terminal, or
(11-3) the IC card, and
   the vehicle-mounted device or the communication module can communicate the control command with the mobile terminal and/or the IC card.

A vehicle-mounted device or a communication module of the twelfth aspect of the present invention is characterized in that, in the vehicle-mounted device or the communication module of any one of the eighth to eleventh aspects, the starting state to be controlled of the vehicle includes at least one of a door lock state of the vehicle, an engine starting state of the vehicle, a state of an immobilizer of the vehicle, or a state of a push button for starting the vehicle.

A vehicle-mounted device or a communication module of the thirteenth aspect of the present invention is characterized in that, in the vehicle-mounted device or the communication module of any one of the eighth to twelfth aspects, the vehicle-mounted device or the communication module controls the starting state of the vehicle based on at least elapsed time from a change of on/off state of vehicle power, which is detected by the vehicle information detecting means.

A vehicle-mounted device of the fourteenth aspect of the present invention is characterized in that, in the vehicle-mounted device of any one of the eighth to thirteenth aspects, the vehicle-mounted device controls the starting state of the vehicle by controlling an external relay.

A vehicle of the fifteenth aspect of the present invention is characterized in that the vehicle includes the vehicle-mounted device or the communication module of any one of the eighth to fourteenth aspects.

A server of the sixteenth aspect of the present invention provides a vehicle-mounted device or a communication module for controlling a starting state of a vehicle with a control command for controlling the starting state of the vehicle and manages the starting state of the vehicle, and is characterized in that
the control command includes at least a starting state reservation control command for switching between a starting-disabled state and a starting-enabled state of the vehicle, and
when the vehicle-mounted device or the communication module is provided with the control command from the server, if a predetermined condition regarding the starting state reservation control command is satisfied on the basis of vehicle information detected by a vehicle information detecting means, the vehicle-mounted device or the communication module switches the starting state of the vehicle.

A vehicle remote control method of the seventeenth aspect of the present invention is characterized in that the method comprises:
a means for controlling a starting state of a vehicle based on a control command that is provided from a server for managing the starting state of the vehicle, controls the starting state of the vehicle, and includes at least a starting state reservation control command for switching between a starting-disabled state and a starting-enabled state of the vehicle; and
a vehicle information detecting means for detecting vehicle information, and
when the means for controlling the starting state of the vehicle is provided with the control command from the server, if a predetermined condition regarding the starting state reservation control command is satisfied on the basis of the vehicle information, the means for controlling the starting state of the vehicle switches the starting state of the vehicle.

A vehicle remote control program of the eighteenth aspect of the present invention is characterized in that the vehicle remote control program operates each of the means in the vehicle remote control method of the seventeenth aspect with a computer.

A storage medium of the nineteenth aspect of the present invention is characterized in that the storage medium stores the vehicle remote control program of the eighteenth aspect.

### [Advantageous Effects of Invention]

According to the vehicle remote control system of the first aspect, it is possible to provide a vehicle remote reservation control system capable of switching a vehicle to a starting-disabled state even when communication between the server and the vehicle-mounted device is not established. Further, the server can transmit the starting state control command to the vehicle-mounted device at any time regardless of the state of the vehicle, so that the vehicle management in the server can be simplified.

According to the vehicle remote control system of the second aspect, it is possible to perform the reservation control with at least any one of
(2-1) a switching command from the starting-disabled state to the starting-enabled state,
(2-2) a switching command from the starting-enabled state to the starting-disabled state,
(2-3) position reservation information about a position of the vehicle where the starting state is to be switched, or
(2-4) time reservation information about time when the starting state is to be switched. For example, the location and time for switching the vehicle to the starting-disabled state can be reserved.

According to the vehicle remote control system of the third aspect, by linking with the financial system, the status of payment of the predetermined charge can be instantly monitored. Therefore, it is possible to provide a vehicle starting control system that can shorten the time lag from the user payment of the charge to the confirmation of the payment in the server.

According to the vehicle remote control system of the fourth aspect, a plurality of means for communicating the control command for controlling the starting state of the vehicle with the server are provided. Thus, the locking and unlocking operation of the door lock and the vehicle starting operation can be controlled by a means convenient for users. Therefore, it is possible to provide a highly convenient system for users and vehicle keys can be easily managed. Further, the vehicle starting restriction can be released even in a poor radio wave condition or even when the vehicle-mounted device is in the sleep state. Therefore, it is possible to provide a vehicle starting control system that can shorten the time lag from the confirmation of user payment to the release of vehicle starting restriction.

According to the vehicle remote control system of the fifth aspect, it is possible to, at least, control the unlocking and locking of the door lock of the vehicle or control the engine starting-enabled state and the engine starting-disabled state of the vehicle.

According to the vehicle remote control system of the sixth aspect, in a case where the charge has not been paid within the predetermined period or theft is detected, when the vehicle is to be changed to the starting-disabled state under an instruction from the server, it is possible to prevent the vehicle from entering the starting-disabled state in a dangerous place or in a place where the vehicle obstructs people with considering safety of the vehicle.

According to the vehicle remote control system of the seventh aspect, the vehicle-mounted device can control the external relay to switch the vehicle between the starting-disabled state and the starting-enabled state. Therefore, it is possible to eliminate security vulnerabilities in communication of the vehicle-mounted device.

According to the vehicle-mounted device or the communication module of the eighth aspect, it is possible to provide a vehicle-mounted device or a communication module capable of switching a vehicle to a starting-disabled state even when communication between the server and the vehicle-mounted device is not established. Further, the server can transmit the starting state control command to the vehicle-mounted device at any time regardless of the state of the vehicle, so that the vehicle management in the server can be simplified.

According to the vehicle-mounted device or the communication module of the ninth aspect, it is possible to perform the reservation control with at least any one of
(9-1) a switching command from the starting-disabled state to the starting-enabled state,
(9-2) a switching command from the starting-enabled state to the starting-disabled state,
(9-3) position reservation information about a position of the vehicle where the starting state is to be switched, or
(9-4) time reservation information about time when the starting state is to be switched. For example, the location and time for switching the vehicle to the starting-disabled state can be reserved.

According to the vehicle-mounted device or the communication module of the tenth aspect, by linking with the financial system, the status of payment of the predetermined charge can be instantly monitored. Therefore, it is possible to provide a vehicle starting control system that can shorten the time lag from the user payment of the charge to the confirmation of the payment in the server.

According to the vehicle-mounted device or the communication module of the eleventh aspect, a plurality of means for communicating the control command for controlling the starting state of the vehicle with the server are provided. Thus, the locking and unlocking operation of the door lock and the vehicle starting operation can be controlled by a means convenient for users. Therefore, it is possible to provide a highly convenient system for users and vehicle keys can be easily managed. Further, the vehicle starting restriction can be released even in a poor radio wave condition or even when the vehicle-mounted device is in the sleep state. Therefore, it is possible to provide a vehicle starting control system that can shorten the time lag from the confirmation of user payment to the release of vehicle starting restriction.

According to the vehicle-mounted device or the communication module of the twelfth aspect, it is at least possible to control the unlocking and locking of the door lock of the vehicle or control the engine starting-enabled state and the engine starting-disabled state of the vehicle.

According to the vehicle-mounted device or the communication module of the thirteenth aspect, in a case where the charge has not been paid within the predetermined period or theft is detected, when the vehicle is to be changed to the starting-disabled state under an instruction from the server, it is possible to prevent the vehicle from entering the starting-disabled state in a dangerous place or in a place where the vehicle obstructs people with considering safety of the vehicle.

According to the vehicle-mounted device of the fourteenth aspect, the vehicle-mounted device can control the external relay to switch the vehicle between the starting-disabled state and the starting-enabled state. Therefore, it is possible to eliminate security vulnerabilities in communication of the vehicle-mounted device.

According to the vehicle of the fifteenth aspect, it is possible to provide a vehicle achieving the same effects as in the vehicle-mounted device or the communication module of any one of the eighth to fourteenth aspects.

According to the server of the sixteenth aspect, it is possible to provide a server capable of switching a vehicle to a starting-disabled state even when communication between the server and the vehicle-mounted device is not established. Further, the server can transmit the starting state control command to the vehicle-mounted device at any time regardless of the state of the vehicle, so that the vehicle management in the server can be simplified.

According to the vehicle remote control method of the seventeenth aspect, it is possible to provide a vehicle remote control method capable of switching a vehicle to a starting-disabled state even when communication between the server and the vehicle-mounted device is not established. Further, the server can transmit the starting state control command to the vehicle-mounted device at any time regardless of the state of the vehicle, so that the vehicle management in the server can be simplified.

According to the vehicle remote control program of the eighteenth aspect, it is possible to provide a vehicle remote control program achieving the same effects as in the vehicle remote control method of the seventeenth aspect.

According to the storage medium of the nineteenth aspect, it is possible to provide a storage medium storing the vehicle remote control program achieving the same effects as in the vehicle remote control method of the seventeenth aspect.

### Brief Description of Drawings

FIG. 1 is an overall diagram of a remote control system according to the first embodiment.
FIG. 2 is a control flowchart of a server according to the first embodiment.
FIG. 3 is a block diagram of a vehicle-mounted device according to the first embodiment.
FIG. 4 is a control flowchart of a vehicle-mounted device according to the first embodiment.
FIG. 5 is a control flowchart of switching to a starting-enabled state according to the first embodiment.
FIG. 6 is an overall diagram of a remote control system according to the first modification of the first embodiment.
FIG. 7 is an overall diagram of a remote control system according to the second modification of the first embodiment.
FIG. 8 is a control flowchart of a vehicle-mounted device according to the second embodiment.
FIG. 9 is a control flowchart of a vehicle-mounted device according to the third embodiment.
FIG. 10 is a control flowchart of a vehicle-mounted device according to the fourth embodiment.
FIG. 11 is an overall diagram of a remote control system according to the fifth embodiment.
FIG. 12 is a control flowchart of a communication module according to the fifth embodiment.

### Description of Embodiments

Hereinafter, a vehicle remote control system, a vehicle-mounted device or a communication module, a vehicle, a server, a vehicle remote control method, a vehicle remote control program, and a storage medium according to embodiments of the present invention will be described with reference to the drawings. However, each embodiment described below is merely an example of a vehicle remote control system, a vehicle-mounted device or a communication module, a vehicle, a server, a vehicle remote control method, a vehicle remote control program, and a storage medium for embodying the technical concept of the present invention. The present invention is not limited to these embodiments, but is equally applicable to other embodiments within the scope of the claims.

### First embodiment

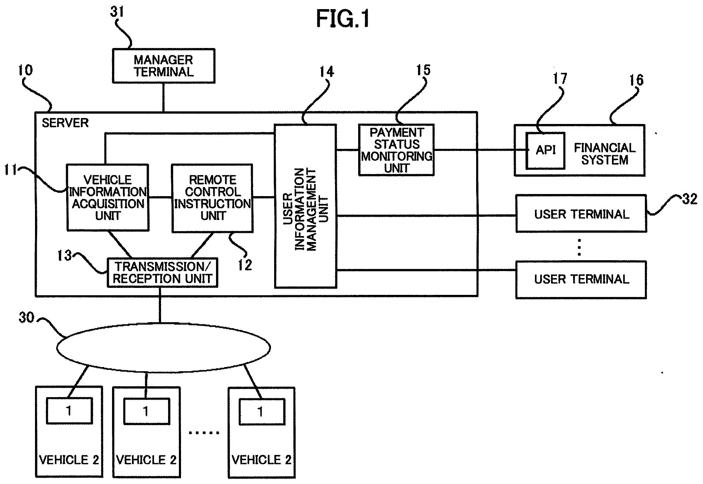

A vehicle remote control system, a vehicle-mounted device or a communication module, a vehicle, a server, a vehicle remote control method, a vehicle remote control program, and a storage medium according to the first embodiment of the present invention will be described with reference to FIGS. 1 to 7.

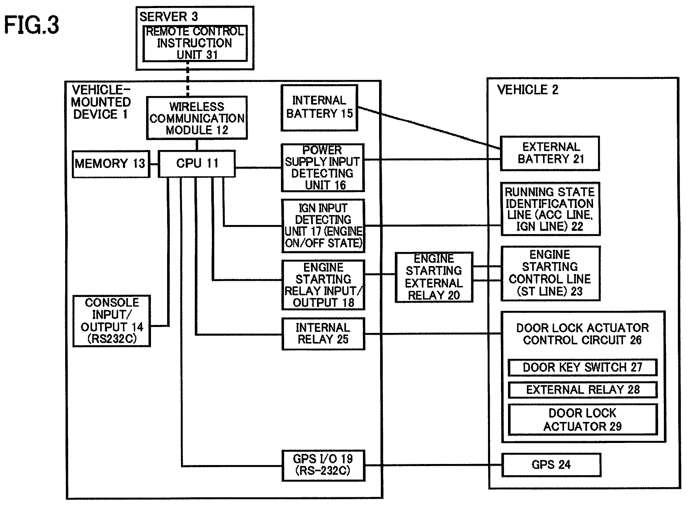

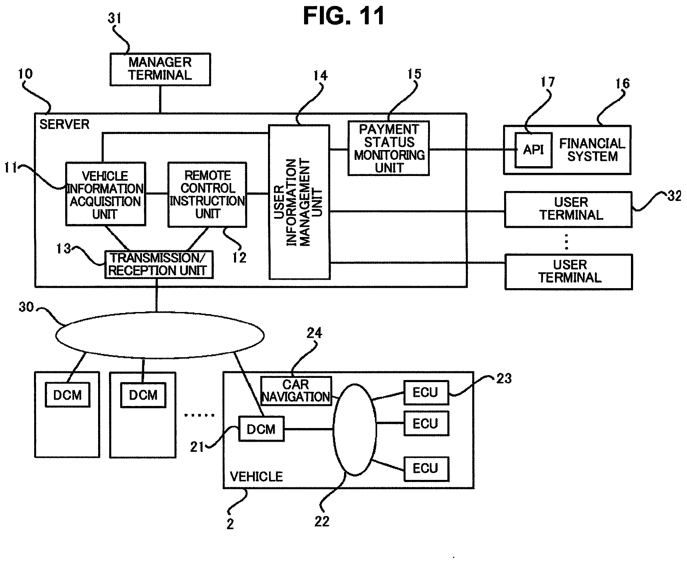

FIG. 1 is an overall diagram including a vehicle remote control system. In the present embodiment, first, car lease will be described, but the present invention is not limited to this application, and is applicable to applications that remotely control the starting state or the like of a vehicle, for example, car rental or car sharing. The starting state to be controlled of the vehicle includes at least one of the door lock state of the vehicle, the engine starting state of the vehicle, the state of the immobilizer of the vehicle, and the state of a push button for starting the vehicle. For example, the unlocking and locking operation of the door lock of the vehicle and switching operation between the starting-enabled state and the starting-disabled state of the vehicle are included. When this system is applied to car lease, the vehicle is provided to the user, and if the user does not pay the charge (for example, monthly fee) within a predetermined time limit, a service in which the vehicle is remotely stopped (starting-disabled state) and that specifies the vehicle position and collects the vehicle is realized. A vehicle-mounted device or a communication module 1 is installed in a vehicle 2. Hereinafter, the vehicle-mounted device or the communication module 1 is explained as a vehicle-mounted device 1 in the present embodiment. FIG. 3 illustrates the connection of the vehicle-mounted device 1, and FIG. 11 illustrates the connection of a DCM21 as a communication module. A server 10 communicates with the vehicle-mounted device 1 to manage locking and unlocking of each vehicle and communicates with a user terminal 32 to manage reservations of the vehicle. When applied to car rental or car sharing, a service in which the vehicle is remotely stopped (starting-disabled state) and that specifies the vehicle position and collects the vehicle is realized in such a case where a specific vehicle is used without prior reservation, where there is a problem with payment for the reservation, where the specific vehicle is used for a predetermined period of time beyond the reservation period without prior extension procedure, where the geographical range in which the specific vehicle is used exceeds the range set at the time of reservation, or where the usage mode of the specific vehicle set at the reservation time is violated.

One vehicle-mounted device 1 is installed on one vehicle. The vehicle-mounted device 1 may be installed in any place in the vehicle 2 as long as the vehicle-mounted device 1 can control the vehicle 2 as described later. When the vehicle-mounted device 1 is an add-on part, it can be installed at a place easy to access for installation such as under the passenger's seat. In terms of the antitheft purpose, it can be disposed at a place difficult to access for removal of the vehicle-mounted device 1, for example, in the lower portion of the engine compartment or the inside of the instrument panel. Alternatively, the vehicle-mounted device 1 may be built in beforehand during manufacturing of the vehicle 2. The vehicle-mounted device 1 transmits the vehicle information on the vehicle 2 acquired by a vehicle information detecting means to the server through a wireless communication network 30 and receives a locking command, an unlocking command, and an engine starting relay control signal from the server 10 through the wireless communication network 30 to control a door lock actuator and an engine starting external relay 50 (see FIG. 3) of the vehicle 2. By controlling the door lock actuator 59, the locking and unlocking of the door lock of the vehicle can be remotely controlled via the server 10 based on the locking and unlocking commands from the user terminal.

Further, by controlling the engine starting external relay 50, it is possible to switch the engine starting state of the vehicle between the starting-disabled state and the starting-enabled state. Note that the locking command, the unlocking command and the engine starting relay control signal can include authentication information used for the vehicle-mounted device, and this authentication information can be used for authentication in the vehicle-mounted device 1. When this authentication information is appropriate, the locking command, the unlocking command, and the engine starting relay control signal are accepted in the vehicle-mounted device 1. In the case of an internal combustion engine vehicle, the engine cannot be started in the starting-disabled state (this means that it prohibits the restart of the engine rather than it does not turn off the running engine), and in the starting-enabled state, the engine can be started. Here, the wireless communication network 30 may be any forms as long as communication between the vehicle-mounted device 1 and the server 10 is possible. For example, 2G, 3G, 4G, 5G, Wi-Fi (registered trademark), WiMAX (registered trademark), wireless LAN, beacon, Bluetooth (registered trademark), ZigBee (registered trademark), V2X, other dedicated lines and the like are included.

The server 10 includes a user information management unit 14, a payment status monitoring unit 15, a remote control instruction unit 12, a vehicle information acquisition unit 11 and a transmission/reception unit 13. The payment status monitoring unit 15 monitors the payment status of the user by using an API (Application Programming Interface) 17 of a financial system 16. According to the IT glossary e- Words, API is a rule that defines the procedure and data format for calling the functions and management data of a computer program (software) from other external programs to use them. When the function that is generally used in other external programs is provided in the form of the platform such as OS and middleware, the API defines the procedure for calling the function of the platform to use it. A developer of an external program can reduce his development load by calling and using each function by using the API. The payment status monitoring unit 15 can monitor the payment status of the user via the financial system 16 in real time by using the API 17 of the financial system 16. Therefore, it is possible to promptly detect that the user has made the predetermined payment. The user information management unit 14 can grasp the payment status of the user in real time monitored by the payment status monitoring unit 15 and grasp the information of the vehicle information acquisition unit 11.

In addition, the user information management unit 14 manages the vehicle reservation by communicating with the user terminal 32 in the case of car rental or car sharing, transmits door lock key information to the user terminal 32 according to the reservation status and the payment status and receives a locking command and an unlocking command from the user terminal 32. Further, the remote control instruction unit 12 generates a locking command, an unlocking command and an engine starting relay control command for the vehicle-mounted device 1. The operations in which the user information management unit 14 transmits the door lock key information to the user terminal 32, in which the remote control instruction unit 12 generates an unlocking command for the vehicle-mounted device 1, and in which the engine is set to the starting-enabled state by the engine starting relay control command are equivalent to the operation of "switching from the starting-disabled state to the starting-enabled state". The vehicle information acquisition unit 11 acquires vehicle information from the vehicle-mounted device 1. The transmission/reception unit 13 transmits/receives data to/from the vehicle-mounted device. The server 10 is connected to a manager terminal 31.

The user terminal 32 is preferably a mobile terminal such as a smartphone, a mobile phone, or a tablet terminal, and at least needs to be portable to be also used as a vehicle door lock key. It is desirable that the vehicle 2 and the user terminal 32 have a GPS function. If the vehicle 2 and the user terminal 32 have the GPS function, the server 10 can grasp the vehicle position by the GPS mounted on the vehicle 2 and the user position by the GPS of the user terminal 32. Therefore, the server 10 can determine whether the locking command and the unlocking command transmitted from the user terminal 32 are valid or invalid. That is to say, if the unlocking command is transmitted from the user terminal 32 when the user terminal 32 is away from the corresponding vehicle 2, the server 10 determines that the unlocking command is invalid and does not transmit unlocking command to the corresponding vehicle 2. On the other hand, if the unlocking command is transmitted from the user terminal 32 when the user terminal 32 is near from the corresponding vehicle 2, the server 10 determines that the unlocking command is valid and transmits the unlocking command to the corresponding vehicle 2. Here, the distance between the vehicle 2 and the user terminal 32 is detected by the GPS function provided in the vehicle 2 and the user terminal 32, but needless to say, the distance between the vehicle 2 and the user terminal 32 may be detected by other configurations. For example, if the user terminal 32 and the vehicle-mounted device 1 are each equipped with a specific short-range wireless communication transmission/reception device, the distance between the user terminal 32 and the reserved vehicle 2 can be detected depending on whether or not it is within the area of short-range wireless communication from the user terminal 32 to the vehicle-mounted device 1. Examples of this short-range wireless communication include Bluetooth (registered trademark), ZigBee (registered trademark), infrared communication, RFID (Radio Frequency Identifier), NFC (Near Field Communication), and the like, but the present invention is not limited thereto and includes any type of short-range wireless communication.

Also in a case where a vehicle is reserved from a home PC, if the smartphone receives the door lock key information, it is possible to use the smartphone to transmit the locking command and the unlocking command to the corresponding vehicle. For this reason, in the present invention, the user terminal 32 is not limited to one mobile terminal, and any of a plurality of mobile terminals such as a smartphone and a tablet terminal can transmit a locking command and an unlocking command to a specific vehicle. In this way, various forms of mobile terminals are included in the present invention.

The payment status monitoring unit 15 can monitor the payment status of the user in real time by using the API 17 of the financial system 16. However, the payment status monitoring unit 15 may be directly provided with a function for grasping the payment status of the user.

The transmission/reception unit 13 performs wireless communication with the plurality of vehicle-mounted devices 1 through the wireless communication network 30. In FIG. 1, communication by the wireless communication network 30 and communication between the user information management unit 14 and the user terminals 32 are illustrated separately, but communication between the user information management unit 14 and the user terminals 32 may be performed by the wireless communication network 30. That is to say communication between the user information management unit 14 and the user terminal 32 also includes, for example, 2G, 3G, 4G, 5G, Wi-Fi (registered trademark), WiMAX (registered trademark), wireless LAN, a beacon, and Bluetooth (registered trademark), ZigBee (registered trademark) and the like.

The manager terminal 31 includes a display means such as a display for presenting information to the manager and an information input means for inputting information from the manager. Examples of the manager terminal 31 include a PC, a tablet terminal, and a mobile terminal. A touch panel display, a keyboard, a mouse, and the like can be used as the information input means. When a touch panel display is used, a separate keyboard can be omitted.

The server 10 can grasp the vehicle operation status from the vehicle information periodically received from the vehicle-mounted device 1. Preferably, the vehicle information includes the situation of the vehicle door lock, on/off information on the power of the vehicle, power supply input detection information, the state of the engine starting external relay, and GPS position information on the vehicle. The server 10 grasps the vehicle operation status to determine, as necessary, whether the vehicle is parked at a predetermined parking area, whether the vehicle is parked at a place other than a predetermined parking area, whether the user is moving using the vehicle, or whether there is a possibility that the vehicle has been stolen.

Determinations such as determination whether the specific vehicle is used without prior reservation, whether there is a problem with payment for the reservation, whether the specific vehicle is used for a predetermined period of time beyond the reservation period without prior extension procedure, whether the geographic range in which the specific vehicle is used exceeds the range set at the time of reservation, whether the usage mode of the specific vehicle set at the reservation time is violated, whether each user paid the predetermined charge within the predetermined period, whether to change the corresponding vehicle to the starting-disabled state, vehicle operation status described below, or whether to make inquiries to the user and report to the police when theft or abnormality described below occurs may be automatically made by the server 10, or a part or all of them may be manually made by an manager as necessary. If it is automated by the server 10, the burden on the manager can be reduced. On the other hand, if the manager manually makes some or all of these determinations, it is not necessary for the server 10 to make complicated condition determination, and therefore the configuration of the server 10 can be simplified.

Next, a method of automatically determining the vehicle operation status by the server 10 will be described in detail. In the case of car rental or car sharing, the parking lot where the user receives and returns the vehicle is registered in advance from a plurality of business offices (manned or unmanned parking lots, etc.). Also in the case of car lease, the user has previously registered the parking lot that he mainly uses. When the power of the vehicle is in the off state for a predetermined time or longer at a place equivalent to a parking area registered in advance, it is determined that the vehicle is parked at a predetermined parking area. When the power of the vehicle is in the off state for a predetermined time or longer at a place other than the parking area registered in advance, it is determined that the vehicle is parked at a place other than the predetermined parking area. When the vehicle is at a place other than the parking area registered in advance and the power of the vehicle is not in the off state for a predetermined time or longer, it is determined that the user is moving using the vehicle.

When the vehicle is out of the range registered in advance by the user for a predetermined period or longer, it is determined that there is a possibility that the vehicle has been stolen. If it is determined that there is a possibility that the vehicle has been stolen, the contact registered in advance by the user is notified of the vehicle operation status, and an inquiry is made as to whether theft has occurred. If there is no reply from the user within a predetermined time limit or if there is a reply indicating theft from the user, a notification of theft is given to the manager, and an engine starting relay control command corresponding to the starting-disabled state is transmitted to the vehicle-mounted device 1. If the manager receives a notification of theft from the server 10, the manager makes contact with the user to check on the occurrence of theft and then reports the vehicle theft to the police if necessary. The server 10 does not necessarily have to be provided with such a means for determining the vehicle operation status. By reducing the functions of the server 10, the calculation on the server 10 is simplified, and the configuration of the server 10 can be simplified.

The vehicle-mounted device 1 further includes a means for detecting an abnormality such as removal of the vehicle-mounted device 1 from the vehicle 2 or cutting-off or removal of wiring connected to the vehicle-mounted device 1. When such an abnormality is detected, the vehicle-mounted device 1 notifies the server 10 of the occurrence of the abnormality. When this notification is given, the server 10 promptly gives a notification to the manager. When receiving the notification of abnormality from the server 10, the manager makes contact with the user to check on the occurrence of theft and then reports the vehicle theft to the police if necessary.

Examples of possible cases where the vehicle-mounted device 1 has been removed from the vehicle 2 include (1) theft by a thief, (2) misuse of the vehicle by the user, and (3) use of the vehicle in an unavoidable and urgent case by the user who has not paid. When the vehicle-mounted device 1 has been removed from the vehicle 2, in cases where theft and misuse as in (1) and (2) are always assumed, it is desirable to set the vehicle to the starting-disabled state. On the other hand, when the vehicle-mounted device 1 has been removed from the vehicle 2 in the urgent case as in (3), for example, when an emergency patient is to be transported, it is desirable to set the vehicle to the starting-enabled state. As will be described later, the engine starting external relay 50 can switch its connection to select a mode of setting the starting-disabled state or a mode of setting the starting-enabled state when the wiring is cut off or removed. Accordingly, the engine starting external relay 50 is preset to enter the starting-disabled state if the vehicle-mounted device 1 detects the abnormality or if the manager assumes theft and misuse as in (1) and (2) when the wiring of the engine starting external relay 50 is cut off or removed, whereas the engine starting external relay 50 is preset to enter the starting-enabled state if the manager assumes an urgent case as in the case (3).

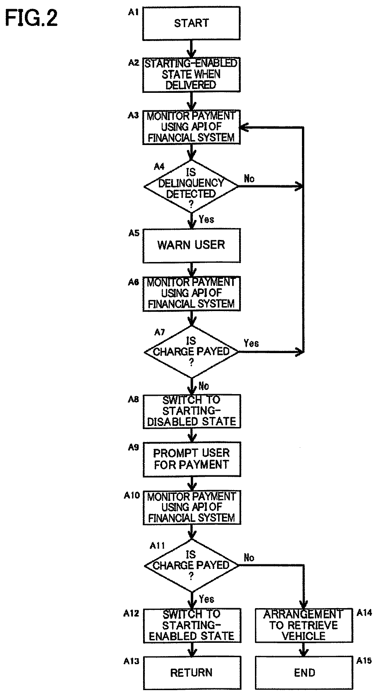

In the case of car lease, an example of the flowchart of monitoring the payment in the server 10 and switching control between the starting-enabled state and the starting-disabled state will be described with reference to Fig. 2. The flowchart starts in A1. In A2, the engine starting external relay 50 of the vehicle is set to the starting-enabled state so that the vehicle can be started when the vehicle is delivered (at the time of shipment). In A3, the payment status monitoring unit 15 monitors the payment status of the user in real time by using the API 17 of the financial system 16, and in A4, whether or not the user of each vehicle paid the charge within a predetermined period (whether or not there is delinquency) is determined. If the charge has not been paid within the predetermined period (Yes in A4), the process proceeds to A5. In A5, since the user has not paid the charge, the user is warned that the vehicle would be switched to the starting-disabled state unless the charge is paid within a predetermined period, and the process proceeds to A6. If No is selected in A4, the process returns to A3.

In A6, the payment status monitoring unit 15 monitors the payment status of the user in real time by using the API 17 of the financial system 16, and in A7, whether or not the charge has been paid by the user of each vehicle within the predetermined period is determined. If the determination in A7 is No, the process proceeds to A8. In A8, after confirming the vehicle operation status, if the predetermined condition is satisfied, in order to set the corresponding vehicle 2 to the starting-disabled state, the server 10 transmits the engine starting relay control command corresponding to the starting-disabled state from the remote control instruction unit 12 to the corresponding vehicle-mounted device 1, and the process proceeds to A9. When the vehicle-mounted device 1 receives the engine starting relay control command corresponding to the starting-disabled state, the engine starting external relay 50 is switched to the starting-disabled state, so that the corresponding vehicle 2 is set to the starting-disabled state. That is to say, in the case of an internal combustion engine vehicle, the engine cannot be started. In the present embodiment, in the case of Yes in A4 (in the case where delinquency is detected), the user is temporarily warned in A5 to switch the vehicle to the starting-disabled state, but the present invention is not limited to this example. For example, in the case of Yes in A4, it is possible to directly proceed to A8 and switch the vehicle to the starting-disabled state. In this way, it will be decided in consideration of local laws and business practices whether or not to proceed directly to A8 when a delinquency is detected and switch the vehicle to the starting-disabled state, or whether to give a warning and give a predetermined grace period before switching the vehicle to the starting-disabled state.

On the other hand, if the determination in A7 is Yes, the process returns to A3, and the payment status monitoring unit 15 uses the API 17 of the financial system 16 to monitor the payment status of the user in real time. When there is no engine starting relay control command from the server 10 to the vehicle-mounted device 1 corresponding to the starting-disabled state, the engine starting external relay 50 is normally set to the starting-enabled state. Therefore, if the charge is paid within a predetermined period (Yes in A7), the engine starting relay control command corresponding to the starting-disabled state is not transmitted from the server 10 to the vehicle-mounted device 1. Thus, the engine starting external relay 50 is still set to the starting-enabled state, and the corresponding vehicle 2 is in the starting-enabled state, that is to say, in the case of an internal combustion engine vehicle, the engine can be started.

In A9, the user is informed that the vehicle is in the starting-disabled state because the charge has not been paid, and the user is designated for a predetermined period of time and is prompted to pay the predetermined charge. Then, the process proceeds to A10. In A10, the payment status monitoring unit 15 monitors the payment status of the user in real time by using the API 17 of the financial system 16, and in A11, whether or not the charge has been paid by the user of the vehicle within the predetermined period is determined. If the determination in A11 is YES (if the payment is made), the server 10 transmits an engine starting relay control command corresponding to the starting-enabled state from the remote control instruction unit 12 to the corresponding vehicle-mounted device 1 in order to set the corresponding vehicle to the starting-enabled state again. When the vehicle-mounted device 1 receives the engine starting relay control command corresponding to the starting-enabled state, the engine starting external relay 50 is switched to the starting-enabled state, so that the corresponding vehicle enters the starting-enabled state again.

When the charge is a monthly fee, it is determined whether a predetermined amount of money has been paid, for example, no later than 25th of the previous month (corresponding to A4). If a predetermined amount has not been paid, a message is transmitted to the user to indicate that the user is delinquent and if a predetermined charge fails to be paid within one week, the vehicle will be set to the starting-disabled state (corresponding to A5). If a predetermined charge is not paid within one week from transmission of this message, the server 10 confirms the vehicle operation status and then transmits the engine starting relay control command corresponding to the starting-disabled state from the remote control instruction unit 12 to the corresponding vehicle-mounted device 1 under the condition that a predetermined condition is satisfied (corresponding to A8). If the user does not pay a predetermined fee after the elapse of a predetermined period, for example, one month since the vehicle was set to the starting disabled state (if the determination in A11 is No), the manager uses the position information of the specific vehicle acquired by the vehicle information acquisition unit 11 to make an arrangement to retrieve the vehicle (corresponding to A14, and thereafter ends in A15 and ends the process).

On the other hand, if the deposit of a predetermined amount of money by the user is confirmed within a predetermined time limit after the engine starting relay control command corresponding to the starting-disabled state is transmitted to the vehicle-mounted device 1 (if the determination in A11 is yes), the server 10 transmits the engine starting relay control command corresponding to the starting-enabled state from the remote control instruction unit 12 to the corresponding vehicle-mounted device 1 and sets the vehicle to the starting-enabled state again (corresponding to A12). In a state in which there is no engine starting relay control command corresponding to the starting-disabled from the server 10 to the vehicle-mounted device 1, the engine starting external relay 50 is usually set to the starting-enabled state, and thus the corresponding vehicle is set in the starting-enabled state. Accordingly, the user can use the vehicle kept in the starting-enabled state as long as the user has paid a predetermined fee no later than 25th every month.

After the vehicle is switched to the starting-disabled state in A8 and the user is prompted to make a predetermined payment in A9, if the user wants to use the vehicle immediately, the user will promptly make the predetermined payment. In this case, since the user wants to use the vehicle immediately, if there is a time lag between the time when the predetermined payment is made and the time when the vehicle is actually switched from the starting-disabled state to the starting-enabled state, it is disadvantageous and problematic for the user who wants to use the vehicle immediately. Thus, in A10, the payment status of the user is monitored in real time by using the API 17 of the financial system 16. Therefore, in A11, it is possible to recognize in real time that the user has made the predetermined payment, and in A12, immediately after the predetermined payment is made, the server 10 transmits the engine starting relay control command corresponding to the starting-enabled state from the remote control instruction unit 12 to the corresponding vehicle-mounted device 1, and again sets the vehicle to the starting-enabled state. The process returns at A13.

The present invention is not limited to the case of car lease, and can also be applied to, for example, car sharing or car rental. In those cases, the present invention can be applied to, for example, control of locking and unlocking of a door lock key, or control of switching between vehicle starting-enabled state and vehicle starting-enabled state by the engine starting relay control command. For example, in the case of car sharing or car rental, when the user makes a reservation for a specific vehicle from the user terminal 32 to the user information management unit 14 of the server 10, after the payment procedure for the charge such as internet banking and card payment is completed, the user information management unit 14 transmits door lock key information to the user terminal 32. The user can control the unlocking and locking of the vehicle door lock via the server 10 using this door lock key information. Further, the server 10 can control switching between the starting-enabled state and the starting-disabled state of the vehicle 2 according to the payment status of the user, the status of the vehicle and the like. Also in this case, by monitoring the payment status of the user in real time by using the API 17 of the financial system 16, the server can recognize in real time that the user has made a predetermined payment. Therefore, it is possible to shorten the time lag from the user payment of the charge to the release of the vehicle starting restrictions (for example, the door lock is unlocked, or the vehicle 2 is switched to the starting-enabled state).

The configuration of the vehicle-mounted device 1 and the connection to the vehicle 2 is now described with reference to FIG. 3. FIG. 3 is a block diagram of the vehicle-mounted device, illustrating an example of connection to an internal combustion engine vehicle. The same configuration as in FIGS. 1 and 2 are denoted with the same reference signs and will not be further described.

The vehicle-mounted device 1 is provided with a CPU 41 for arithmetic operations, a wireless communication module 42 for communicating by radio with the transmission/reception unit of the server 10 through a wireless communication network, a memory 43 configured, for example, as a nonvolatile memory for storing a state of the engine starting relay, a console input/output 44 which is an input/output unit of the console for making a variety of settings for the vehicle-mounted device 1, an internal battery 45 which is a battery inside the vehicle-mounted device to be charged with power from an external battery 51 of the vehicle 2, a power supply input detecting unit 46 for detecting power supply input from the external battery 51 of the vehicle 2, an IGN input detecting unit 47 connected to a running state identification line (ACC line, IGN line) 52 of the vehicle 2 for detecting the on/off state of the engine, an engine starting relay input/output 48 connected to the engine starting external relay 50, a GPS input/output unit (GPSI/O in FIG.3) 49 connected to a GPS 54 of the vehicle 2 for detecting the position information of the vehicle, an internal relay 55 connected to a door lock actuator control circuit 56 for controlling the door lock actuator 59 via an external relay 58, and the like. Although not illustrated, the vehicle-mounted device 1 may include a door lock detection circuit for detecting the situation of the door lock and an acceleration sensor. Furthermore, the vehicle-mounted device 1 may be configured to detect information such as vehicle speed pulse and a fuel sensor. Here, the external battery 51 refers to the term distinguished from the internal battery 45 inside the vehicle-mounted device 1 and means an on-vehicle battery. The engine starting external relay 50 is connected to the engine starting control line (ST line) of the vehicle 2. Although the engine starting external relay 50 is illustrated between the vehicle 2 and the vehicle-mounted device 1 in FIG. 3, the engine starting external relay 50 is actually provided in the inside of the engine compartment of the vehicle 2 and the engine starting external relay 50 is disposed at a place hidden from the outside. The engine starting external relay 50 is thus a structure unable to be removed on purpose by theft or a user. The engine starting relay input/output 48 detects whether the engine starting external relay 50 is in the starting-disabled state or in the starting-enabled state and performs control such that the engine starting external relay 50 is switched to the starting-disabled state or the starting-enabled state based on the engine starting relay control command.

The power supply input detecting unit 46 is connected with the external battery 51, the IGN input detecting unit 47 is connected with the running state identification line 52, the engine starting relay input/output 48 is connected with the engine starting external relay 50, the GPS input/output unit 49 is connected with the GPS 54, and the internal relay 55 is connected with the door lock actuator control circuit 56, each directly with individual wires, not through a vehicle LAN such as CAN. Because a vehicle LAN such as CAN is thus not used, there is no problem of the vulnerability to security risk as is the case in a vehicle LAN such as CAN.

The vehicle-mounted device 1 is driven by electric power of the internal battery 45. The internal battery is always charged with electric power of the external battery 51 of the vehicle 2 and can continuously drive the vehicle-mounted device for a predetermined time even in the event of abnormality such as when the vehicle-mounted device 1 is removed or when the charge line is cut off or removed. For this reason, the server 10 can be notified of the occurrence of abnormality together with the present location information. The latest present location information and other information are stored in the memory 43.

The CPU 41 is connected to the wireless communication module 42, the memory 43, the console input/output 44, the internal battery 45, the power supply input detecting unit 46, the IGN input detecting unit 47, the engine starting relay input/output 48, the GPS input/output unit 49, the internal relay 55, a door lock detecting circuit (not-illustrated), an acceleration sensor (not-illustrated), and the like. The power supply input detecting unit 46, the IGN input detecting unit 47, the GPS input/output unit 49, the door lock detecting circuit, the acceleration sensor and the like are provided as the vehicle information detecting means. The engine starting relay input/output 48 detects a state of the engine starting external relay 50 and controls the engine starting external relay 50 to one of the starting-disabled state and the starting-enabled state. The state of the engine starting external relay 50 is also usable as the vehicle information.

The door lock actuator control circuit 56 is a circuit including a door key switch 57, the external relay 58 and the door lock actuator 59. The door key switch 57 is a switch that is operated by a mechanical key, a smart key or the like and that controls the door lock actuator 59 to lock and unlock the door lock. The door lock actuator control circuit 56 includes a circuit that can lock and unlock the door lock by, other than by operating the door key switch 57, controlling the external relay 58 and the door lock actuator 59 by operating the internal relay 55.

### Acquisition of Vehicle Information

The vehicle-mounted device 1 acquires vehicle information and transmits the vehicle information to the server 10 at predetermined intervals, for example, every 30 seconds, or at the time of occurrence of a certain event such as turning-on of the vehicle power, or both. The vehicle information here includes at least one of information on power supply input from the external battery 51 that is detected by the power supply input detecting unit 46, information on the running state identification line (ACC line, IGN line) detected by the IGN input detecting unit 47, for example, information indicating on/off of the engine, information on the engine starting external relay 50 that is detected by the engine starting relay input/output 48, the position information from the GPS that is detected by the GPS input/output unit 49, information on acceleration that is detected from a not-illustrated acceleration sensor, information on vehicle speed pulse, information on the fuel sensor, and information on the time when the vehicle information is acquired. The speed may be calculated from the GPS position information. The server 10 grasps a vehicle operation status based on such vehicle information.

### Control of Engine Starting External Relay

When the vehicle-mounted device 1 receives the engine starting relay control command from the server 10, the control value thereof is stored into the memory 43, and the engine starting external relay 50 is controlled to attain a state corresponding to the value. A vehicle information-associated control means includes the CPU 41, the memory 43, the IGN input detecting unit 47, and the engine starting relay input/output unit 48 and, when the engine starting external relay 50 is switched, determines whether to employ the engine starting relay control command and not to employ (ignore the engine starting relay control command), considering the on/off switching timing of power of the vehicle. In the case of an internal combustion engine vehicle, the on/off of the power is detected from, for example, information on the running state identification line (ACC line, IGN line) 52 that is detected by the IGN input detecting unit 47, for example, information indicating the on/off state of the engine.

The difference between a case where the engine starting external relay 50 is used as the normally closed type and a case where the engine starting external relay 50 is used as the normally open type is now described with reference to FIG. 3. At least one of the power supply input detecting unit 46, the IGN input detecting unit 47, the engine starting relay input/output 48, and the GPS input/output unit 49 is provided with a means for detecting cutting-off or removal of wiring (not illustrated). As the means for detecting cutting-off or removal of wiring, known methods such as using the voltage change of the wiring associated with cutting-off or removal of wiring can be used. If the power supply input detecting unit 46 does not detect power supply input from the external battery 51, it can be determined that the wiring between the power supply input detecting unit 46 and the external battery 51 has been cut off or removed. The removal of the vehicle-mounted device can also be detected based on the cutting-off or removal of the wiring. It is determined in advance which control to perform, namely, to set the engine starting external relay 50 to the starting-disabled state (open) or to the starting-enabled state (closed) when cutting-off or removal of the wiring is detected.

When cutting-off or removal of the wiring is detected, the engine starting external relay 50 is controlled and the server 10 is notified of the abnormality through the wireless communication module 42. When the server 10 receives the notification of the abnormality, the server 10 promptly notifies the manager. When receiving the notification of the abnormality from the server 10, the manager makes contact with the user to check on the occurrence of theft and then reports theft of the vehicle to the police, if necessary. On the other hand, the vehicle-mounted device 1 gives a notification of the abnormality and also produces an alarm sound using an alarm (not illustrated) mounted on the vehicle-mounted device 1. Instead of an alarm mounted on the vehicle-mounted device 1, the horn, headlamp, blinker, hazard lamp, etc. of the vehicle may be used to produce an alarm. In order to do so, wiring may be connected such that an output signal for alarm output of the vehicle-mounted device 1 is input to the input terminals of the control circuits.

Here, detection of cutting-off or removal of the wiring has been described as an example of the notification of abnormality. Alternatively, the vehicle-mounted device 1 may further include a failure detecting means, so that when the failure detecting means detects a failure of the vehicle-mounted device 1, the server is notified of the failure of the vehicle-mounted device 1 through the wireless communication module 42. When the server 10 receives the notification of a failure of the vehicle-mounted device 1, the server 10 reports the occurrence of a failure to the manager, and the manager receiving the report makes contact with the user of the corresponding vehicle and makes an arrangement to repair or exchange the vehicle-mounted device 1.

As previously mentioned, the possible cases when the manager removes the vehicle-mounted device 1 from the vehicle 2 are (1) theft by a thief, (2) misuse of the vehicle by the user, and (3) use of the vehicle in an unavoidable and urgent case by the user who has not paid. When the vehicle-mounted device 1 has been removed from the vehicle 2, in cases where theft and misuse as in (1) and (2) are always assumed, it is desirable to set the vehicle to the starting-disabled state. Therefore, the normally open type is employed as the engine starting external relay 50, and it is determined in advance to control the engine starting external relay 50 to the starting-disabled state (open) also when cutting-off or removal of the wiring is detected. On the other hand, when the vehicle-mounted device 1 has been removed from the vehicle 2, in the urgent case as in (3), for example, when an emergency patient is to be transported, it is desirable to set the vehicle to the starting-enabled state so that the vehicle can be used in such a case. Therefore, the normally closed type is employed as the engine starting external relay 50, and it is determined in advance to control the engine starting external relay 50 to the starting-enabled state (closed) also when cutting-off or removal of the wiring is detected.

### Power Saving Mode

When the engine of an internal combustion engine vehicle is off, the vehicle-mounted device shifts to a power saving mode to stop the functions except the minimum required functions such as power supply management in order to prevent consumption of power of the external battery 51, after the elapse of a predetermined time, for example, 10 minutes since turning off of the engine. In the power saving mode, the power supply input detecting unit 46, the IGN input detecting unit 47, the engine starting relay input/output 48, and a timer circuit (not illustrated) are always active whereas the other circuits are stopped. During the power saving mode, the vehicle-mounted device 1 does not communicate with the server 10. During the power saving mode, if the power supply input detecting unit 46 detects loss of power supply input, if the IGN input detecting unit 17 detects the on state of the engine (ACC on or IGN on), or if the timer circuit counts a predetermined time (for example, every one hour), the corresponding circuit that is always active even in the power saving mode generates an interrupt to the CPU to switch the vehicle-mounted device 1 from the power saving mode to the normal mode. Because the engine starting relay input/output is always supplied with power even in the power saving mode, the state of the engine starting external relay 50 can be always kept.

### Wireless Communication Module

As previously mentioned, in the normal mode, the vehicle-mounted device 1 acquires vehicle information and transmits the vehicle information to the server 10 at predetermined intervals, for example, every 30 seconds, or at the time of occurrence of a certain event such as when the vehicle power is turned on, or both. When the corresponding circuit that is always active generates an interrupt to the CPU to switch the vehicle-mounted device 1 from the power saving mode to the normal mode, the vehicle-mounted device 1 originates communication with the server 10 to receive the engine starting relay control command or transmit vehicle information. In the normal mode, in addition to communication originating from the vehicle-mounted device 1, the server 10 may originate communication, and the vehicle-mounted device 1 can receive information such as the engine starting relay control command. When a radio wave condition is poor, communication may be retried multiple times, for example, five times until communication is established. As described later, when the radio wave condition is poor and communication fails to be established, the vehicle-mounted device 1 can operate independently, because the vehicle-mounted device 1 stores the engine starting relay control command, which is received from the server 10 through communication in advance in an environment where communication is possible, in the memory 43. Furthermore, because the acquired vehicle information is stored in the memory 43, the vehicle-mounted device 1 can transmit the acquired information altogether to the server 10 when the communication line is recovered.

### Monitoring control of engine starting relay

The monitoring control of the engine starting relay will be described. In a case where the relay state must be in the starting-enabled state based on the relay state value of the starting-disabled state / starting-enabled state, that is to say, in the initial state or in a case where the last relay change request from the server 10 is a change to the starting-enabled state, the state of the engine starting external relay 50 is periodically monitored. As a result of the monitoring, if the engine starting external relay 50 is in a relay state other than the starting-enabled state, it is changed to the starting-enabled state. With this monitoring control, in the supposed-to-be starting-enabled state, the engine starting external relay 50 can be controlled such that the vehicle always enters the starting-enabled state, even when the memory 43 is rewritten with a numerical value different from the original numerical value due to a malfunction of firmware of the vehicle-mounted device. This control can prevent the vehicle from unintentionally entering the starting-disabled state and disturbing legitimate use of the vehicle. For example, even when relay setting value in the memory 43 is rewritten with an unintended value due to a malfunction of firmware of the vehicle-mounted device, the engine starting external relay 50 is controlled such that the vehicle always enters the starting-enabled state when the relay state must be in the starting-enabled state. Thereby, the vehicle is kept in the starting-enabled state. This monitoring control is performed periodically, for example, every 30 seconds in the normal mode and every one hour in the power saving mode.

### Switching control to starting-disabled control

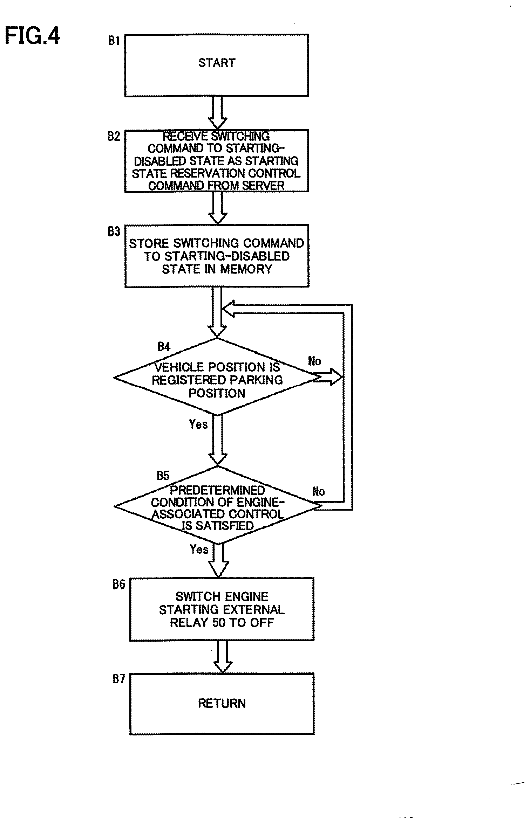

FIG. 4 shows a control flowchart of "switching to starting-disabled state" of A8 in FIG. 2 in a case where the server 10 sends a switching control command as a starting state reservation control command, which is for switching the vehicle 2 from the starting-enabled state to the starting-disabled state, to the vehicle-mounted device 1. An example in which this control flowchart is executed in the vehicle-mounted device 1 will be described.

The control flowchart starts in B1 and the process proceeds to B2. In B2, as the starting state reservation control command, the switching control command for switching the vehicle 2 from the starting-enabled state to the starting-disabled state is received, and the process proceeds to B3. In B3, the switching control command for switching the vehicle 2 from the starting-enabled state to the starting-disabled state is stored in a memory 43, and the process proceeds to B4. In B4, it is determined whether or not the vehicle position is the parking position registered in the vehicle-mounted device 1 in advance by using the position information from the GPS 54 of the vehicle 2. Here, the parking position information that the user normally uses is registered in the memory 43 of the vehicle-mounted device 1. The parking position information is registered, for example, with a console that is connected to the console input/output 44, or by registering a registered parking position information, which is input to the user information management unit 14 from the user terminal 32, in the memory 43 of the vehicle-mounted device 1. As this parking position information, at least one parking position is registered. However, it is also possible to register not only one parking position but also two or more parking positions.

If Yes in B4, the process proceeds to B5. In B5, it is determined whether or not a predetermined condition of the engine-associated control is satisfied, as described later. If Yes in B5, the process proceeds to B6. On the other hand, if No in B4 or No in B5, the process returns again to the determination in B4 in order to execute the switching command to the starting-disabled state, which is stored in the memory. In B6, the engine starting external relay 50 is controlled to be switched to OFF, and the vehicle is switched from the starting-enabled state to the starting-disabled state. Then, the process proceeds to B7, and the process returns at B7.

Next, the determination of "predetermined condition of engine-associated control is satisfied" of B5 in FIG. 4 will be described. In the engine-associated control, if the engine is on, the determination in B5 is No, and the control command for switching the vehicle from the starting-enabled state to the starting-disabled state (the engine starting relay control command) is ignored. Further, in the engine-associated control, when the engine starting relay control command is received from the server 10, if the engine is turned on within the past X minutes (for example, 2 minutes), the determination in B5 is No and the engine starting relay control command is ignored. Further, If the engine is detected to be turned on within Y seconds (for example, 5 seconds) after the engine starting relay control command to the starting-disabled state is executed, the engine starting relay is changed to the starting-enabled state and the determination in B5 is No. On the other hand, in the engine-associated control, if it exceeds X minutes after the engine is turned off, the determination in B5 is Yes, and the process proceeds to B6. Then, the vehicle 2 is switched to the starting-disabled state by switching the engine starting external relay 50 to OFF.

By this engine-associated control, when changing the vehicle to the starting-disabled state by the instruction from the server 10, in consideration of the safety of the vehicle, it is possible to prevent the vehicle from being in the starting-disabled state when the vehicle is placed in a dangerous place or a place that disturbs others. By considering X minutes (for example, 2 minutes) of the relay change prohibition period, even if the vehicle power is turned on again immediately after the vehicle power is turned off, it is possible to prevent the vehicle from being inadvertently switched to the vehicle-disabled state. Further, by considering Y seconds (for example, 5 seconds) of the engine state re-evaluation period, the following problems can be prevented. That is, if the vehicle-mounted device 1 receives the engine starting relay control command corresponding to the starting-disabled state immediately after (within Y seconds) the vehicle power is turned on, by not adopting the engine starting relay control command (by ignoring the engine starting relay control command), it is possible to prevent a problem that the vehicle is switched to the starting-disabled state while the vehicle power is running. The control for switching the vehicle 2 to the starting-disabled state in the present embodiment is not limited to the control for switching the engine starting external relay 50 to OFF. For example, the control, in which the external relay 28 of the door lock actuator control circuit 56 is switched to the locking side, or the like is also included.

Here, the ground for setting X minutes to, for example, two minutes will be described. The vehicle-mounted device 1 is switched to the power saving mode 10 minutes or so after the engine stops to suppress consumption of electric power. In the state of the power saving mode, when the user gets into the vehicle, inserts the key into the cylinder to start the engine, and turns the ignition into the on state, the IGN input detecting unit 47 detects that the engine is turned into the on state from the running state identification line (ACC line, IGN line) 52 and generates an interrupt to the CPU 41 to switch the vehicle-mounted device 1 to the normal mode. It takes about one minute when the radio wave condition is good, and takes about one minute and thirty seconds when the communication has to be retried five times or so because of a poor radio wave condition, until the server 10 recognizes that the vehicle-mounted device 1 has been switched to the normal mode. The engine starting relay control command to give an instruction to switch to the starting-disabled state is not employed (ignored) for a predetermined period after the power of the vehicle is turned off, thereby preventing the vehicle from improperly switching to the starting-disabled state when the power of the vehicle is turned on again immediately after the power of the vehicle is turned off. For example, it is possible to prevent the vehicle from improperly switching to the starting-disabled state in a case where while baggage is unloaded from the trunk or seat in a parking area, the vehicle is temporarily stopped at a position slightly displaced from the parking space, with the power of the vehicle turned off, and after unloading of baggage, the vehicle is pulled into the parking space by turning on the power of the vehicle again. Conversely, when X minutes are too long, the vehicle may be unable to be switched to the starting-disabled state in some cases. Given this, it is determined that the engine starting relay control command is ignored when the engine is on for the past two minutes. Therefore, X minutes are appropriately determined according to the specific performance of the server 10 and the like.

The ground for setting Y seconds to, for example, five seconds will now be described. When the engine starting relay control command is received while the power of the vehicle is on, the vehicle-mounted device 1 does not accept the engine starting relay control command (ignores the engine starting relay control command), considering the safety. While the power of the vehicle is on, the user is moving on the vehicle. Thus, improper switching of the vehicle to the starting-disabled state is prevented, for example, when reception of the engine starting relay control command to change the vehicle to the starting-disabled state is delayed due to a poor radio wave condition. On the other hand, it takes about three seconds until the vehicle-mounted device 1 recognizes the starting of the vehicle after the vehicle is actually started. If the vehicle-mounted device 1 receives the engine starting relay control command immediately after the vehicle is started, the vehicle-mounted device 1 determines that the vehicle is not started and then employs the engine starting relay control command, so that the vehicle is switched to the starting-disabled state although the vehicle is started. For example, when the ignition switch is a push button switch, the starting-disabled state is set by invalidating the push button or by activating the immobilizer (cutting the line for authentication). Of these methods, in the case of invalidating the push button, if switching to the starting-disabled state occurs in the three seconds, the engine is unable to be turned off. On the other hand, in the case of activating the immobilizer, if switching to the starting-disabled state occurs in the three seconds, the push button works to allow the engine to be turned off but the gear lever will not move into Drive. Based on the foregoing, three seconds plus a margin, that is, five seconds are employed as Y seconds. Therefore, Y seconds are appropriately determined according to the specific performance and the like of the vehicle-mounted device 1.

In a case where all the control flowcharts of B1 to B7 described here are executed in the vehicle-mounted device 1, the calculation on the server 10 can be simplified. That is to say, the server 10 can always transmit the control command for switching the vehicle from the starting-enabled state to the starting-disabled state as the starting state reservation control command to the vehicle-mounted device 1 without considering the position and the situation of the vehicle 2. The vehicle-mounted device 1 stores this control command in the memory 43, and when the vehicle 2 is in a safety state, for example, when the vehicle 2 is parked in a registered parking lot and the engine is turned off for more than X hours, the vehicle is switched to the starting-disabled state.

Further, even if the registered parking lot for the vehicle 2 is an area of poor communication condition, an underground parking lot, or the like, in which communication between the server 10 and the vehicle-mounted device 1 cannot be established, if the vehicle-mounted device 1 receives the switching command from the starting-enabled state to the starting-disabled state from the server 10 as the starting state reservation control command while traveling in a place where communication between the server 10 and the vehicle-mounted device 1 can be established, the vehicle 2 is switched to the starting-disabled state when parking safety in the registered parking lot (for example, when YES in B4 and B5). If communication with the vehicle-mounted device 1 cannot be established, the server 10 repeats communication from the server 10 at predetermined intervals until communication with the vehicle-mounted device 1 can be established. Therefore, while the vehicle 2 is traveling in a place where communication between the server 10 and the vehicle-mounted device 1 can be established, the server 10 can reliably transmit the starting state reservation control command to the vehicle-mounted device 1. As a result, the vehicle 2 can be switched from the starting-enabled state to the starting-disabled state even when a place where communication between the server 10 and the vehicle-mounted device 1 cannot be established is registered as a parking lot. The order of determinations of B4 and B5 can be exchanged.

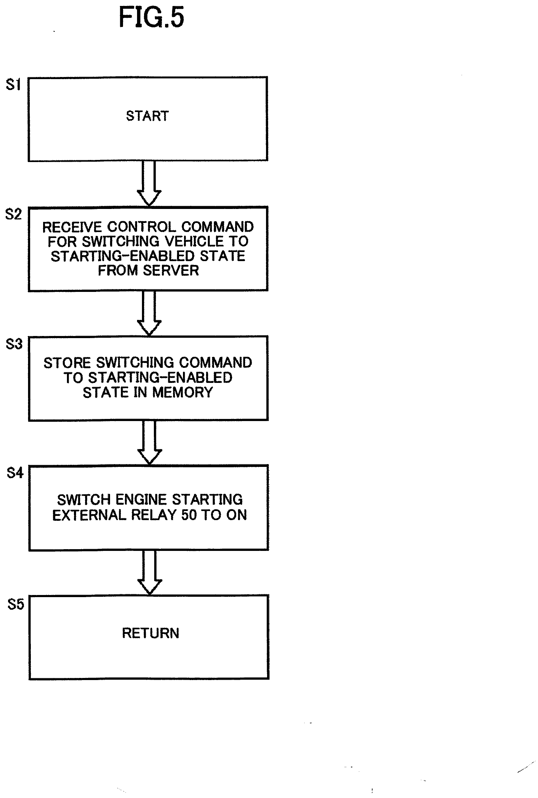

If the control command transmitted from the server 10 to the vehicle-mounted device 1 is the control command for switching the vehicle 2 from the starting-disabled state to the starting-enabled state, the vehicle-mounted device 1 immediately controls to switch the vehicle 2 to the controllable state. FIG. 5 shows a control flowchart when the control command for switching the vehicle 2 from the starting-disabled state to the starting-enabled state is transmitted from the server 10 to the vehicle-mounted device 1. This control flowchart corresponds to "switching to starting-enabled state" of A12 in FIG. 2.

The control flowchart in FIG. 5 will be described. The control flowchart starts in S1 and the process proceeds to S2. In S2, the vehicle-mounted device 1 receives the control command from the server 10 for switching the vehicle 2 from the starting-disabled state to the starting-enabled state, and the process proceeds to S3. In S3, the control command transmitted from the server 10 to the vehicle-mounted device 1 for switching the vehicle 2 from the starting-disabled state to the starting-enabled state is stored in the memory 43, and the process proceeds to S4. In S4, the engine starting external relay 50 is controlled to be switched to ON, and the process proceeds to S5. The process returns at S5. In this way, if communication between the server 10 and the vehicle-mounted device 1 is established, when the vehicle-mounted device 1 receives the control command from the server 10 for switching the vehicle 2 from the starting-disabled state to the starting-enabled state, the control to switch the engine starting external relay 50 to ON can be immediately performed. The control command for switching the vehicle 2 from the starting-disabled state to the starting-enabled state can also include a starting reservation control command. For example, even when communication between the server 10 and the vehicle-mounted device 1 is not established, the control for switching the vehicle 2 to the starting-enabled state can be performed on condition that the vehicle 2 is parked in the registered parking lot.

Next, the first modification and the second modification will be described as methods for switching the vehicle 2 from the starting-disabled state to the starting-enabled state even when communication between the server 10 and the vehicle-mounted device 1 cannot be established.

### [First modification]

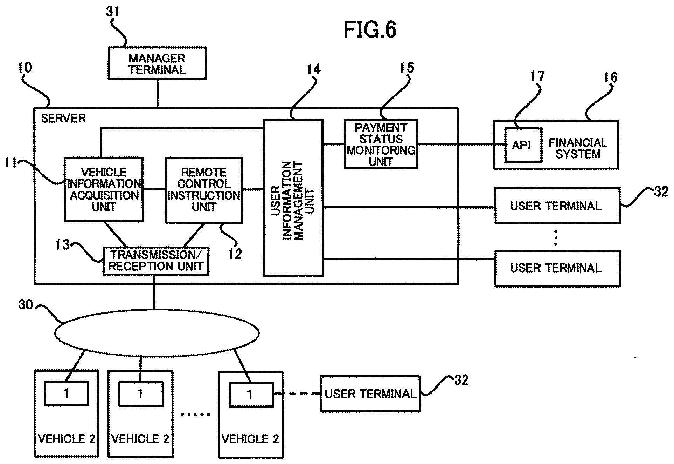

A vehicle remote control system, a vehicle-mounted device or a communication module, a vehicle, a server, a vehicle remote control method, a vehicle remote control program, and a storage medium according to the first modification will be described with reference to FIG. 6. FIG. 6 is an overall view of the vehicle remote control system according to the first modification. The same configuration as in FIGS. 1 to 5 are denoted with the same reference signs and will not be further described.

The control in A12 of the flowchart of FIG. 2, that is, the control when switching again to the starting-enabled state after once being switched to the starting-disabled state, will be described. In A9, the user is informed that the vehicle is in the starting-disabled state because the charge has not been paid, and the user is designated for a predetermined period of time and is prompted to pay the predetermined charge. Then, the process proceeds to A10. In A10, the payment status monitoring unit 15 monitors the payment status of the user in real time by using the API 17 of the financial system 16, and in A11, whether or not the charge has been paid by the user of the vehicle within the predetermined period is determined.

In the case of Yes in the determination in A11 (when payment has been made), the process proceeds to A12, and the server 10 provides the vehicle-mounted device 1 with the engine starting relay control instruction in order to set the vehicle to the starting-enabled state again. At this time, in this embodiment, the server 10 provides the vehicle-mounted device 1 with the engine starting relay control command for setting the vehicle to the starting-enabled state again via the user terminal 32. That is to say, the payment status monitoring unit 15 monitors the payment status of the user in real time by using the API 17 of the financial system 16, and when it is detected that the user has paid the charge within the predetermined period, the engine starting relay control command information for switching the vehicle to the starting state is transmitted from the user information management unit 14 of the server 10 to the corresponding user terminal 32 of the user.

The user terminal 32 and the vehicle-mounted device 1 each have a built-in transmission/reception device for specific short-range wireless communication. Examples of this short-range wireless communication include Bluetooth (registered trademark), ZigBee (registered trademark), infrared communication, RFID (Radio Frequency Identifier), NFC (Near Field Communication), and the like. However, the present invention is not limited thereto and any type of short-range wireless communication is included. For example, when NFC is used, formats such as a type (inexpensive type), b type (type adopted in ETC in Europe), f type (FeliCa (registered trademark)) and the like can be adopted. When the user holds the user terminal 32 over the NFC terminal on the vehicle-mounted device 1 side, the engine starting relay control command information that the user terminal 32 receives from the server 10 for setting the vehicle 2 to the starting-enabled state can be transmitted from the user terminal 32 to the vehicle-mounted device 1. As a result, the vehicle 2 is switched to the starting-enabled state again. The door lock of the vehicle 2 can be locked and unlocked in the same manner via the user terminal 32. In this case, the door lock key information is transmitted from the server 10 to the user terminal 32, and by holding the user terminal 32 over the NFC terminal on the vehicle-mounted device 1 side, the user terminal 32 transmits the door lock key information of the vehicle 2 received from the server 10 to the vehicle-mounted device 1. This allows the user terminal 32 to control locking and unlocking of the door lock of the vehicle 2.

Compared with the case where the remote control instruction unit 12 transmits the door lock key information and the engine starting relay control command information to the vehicle-mounted device 1 through the wireless communication network 30, in the case where the door lock key information and the engine starting relay control command information received from the server 10 are stored in the user terminal 32, if communication between the server 10 and the user terminal 32 is secured, the door lock can be locked and unlocked promptly and the vehicle 2 can be set to the starting-enabled state quickly without depending on the communication status of the wireless communication network 30 even in a poor communication status. Therefore, the vehicle 2 can be quickly and reliably switched to the starting-enabled state without depending on the parking position of the vehicle. Further, when the vehicle-mounted device 1 is in the sleep mode, it may take about one hour in a bad case to switch the vehicle 2 to the starting-enabled state. However, for example, by holding the user terminal 32 over the NFC terminal of the vehicle-mounted device 1, the vehicle starting command can be transmitted directly to the vehicle-mounted device 1. Therefore, it is possible to quickly control the starting state of the vehicle 2 (for example, switching the vehicle 2 to the starting-enabled state and unlocking the door lock key of the vehicle 2) even when the vehicle-mounted device 1 is in the sleep mode.

Also in a system in which the vehicle-mounted device 1 can receive the door lock key information and the engine starting relay control command from the user terminal 32, the vehicle-mounted device 1 may receive the door lock key information and the engine starting relay control command from the server 10. In this case, even in a case where the user loses the user terminal 32 or leaves it at home or the like, if communication between the server 10 and the vehicle-mounted device 1 is established and if the user is authenticated and the reservation content is confirmed using another communication means to the server 10, the door lock can be locked and unlocked by transmitting a locking command and an unlocking command to the vehicle-mounted device 1 via the server 10.

### [Second modification]

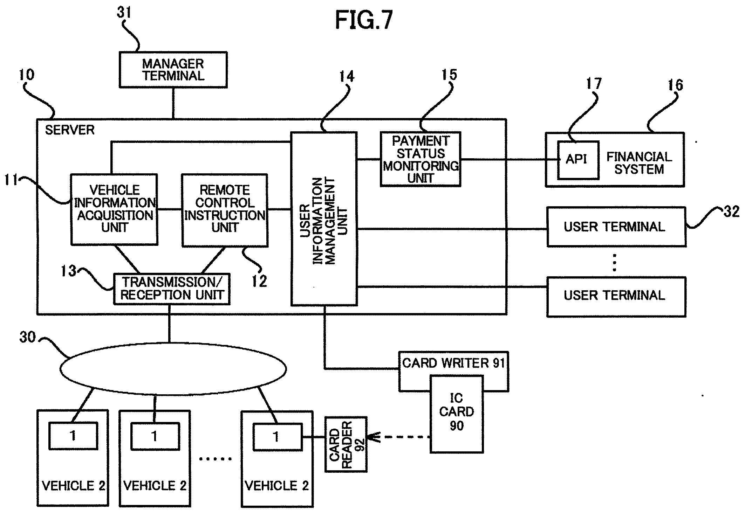

A vehicle remote control system, a vehicle-mounted device or a communication module, a vehicle, a server, a vehicle remote control method, a vehicle remote control program, and a storage medium according to the first modification will be described with reference to FIG. 7. FIG. 7 is an overall diagram of the vehicle remote control system according to the second modification. The same configuration as in FIGS. 1 to 6 are denoted with the same reference signs and will not be further described. In the first modification, the vehicle starting command is transmitted to the vehicle-mounted device 1 via the user terminal 32. However, in the second modification, an IC card 90 in which the vehicle starting command has been written by a card writer 91 is used and the vehicle starting command is read using a card reader 92 of the vehicle-mounted device 1. These points are different from the second embodiment. It should be noted that the user terminal 32 is not an essential component in FIG. 7.

The control in A12 of the flowchart in FIG. 2, that is, the control when switching again to the starting-enabled state after once being switched to the starting-disabled state, will be described. In A9, the user is informed that the vehicle is in the starting-disabled state because the charge has not been paid, and the user is designated for a predetermined period of time and is prompted to pay the predetermined charge. Then, the process proceeds to A10. In A10, the payment status monitoring unit 15 monitors the payment status of the user in real time by using the API 17 of the financial system 16, and in A11, whether or not the charge has been paid by the user of the vehicle within the predetermined period is determined.

In the case of Yes in the determination in A11 (when payment has been made), the process proceeds to A12, and the server 10 provides the vehicle-mounted device 1 with the engine starting relay control instruction in order to set the vehicle into the starting-enabled state again. At this time, in this embodiment, the server 10 provides the vehicle-mounted device 1 with the engine starting relay control command for setting the vehicle to the starting-enabled state again via the IC card 90.

The payment status monitoring unit 15 monitors the payment status of the user in real time by using the API 17 of the financial system 16. Therefore, it is possible to recognize in real time that the user has made a predetermined payment, and immediately after the predetermined payment is made, and the user information management unit 14 can allow the card writer 91 to write the engine starting relay control command information for setting the vehicle to the starting-enabled state in the IC card 90. The vehicle-mounted device 1 is provided with the card reader 92, and when the user holds the IC card 90 over the card reader 92, the engine starting relay control command information for setting the vehicle to the starting-enabled state is transmitted from the IC card 90 to the vehicle-mounted device 1 side. As a result, the vehicle-mounted device 1 switches the vehicle 2 to the starting-enabled state again.

Examples of the IC card format include, for example, RFID, NFC and the like. However, the present invention is not limited thereto and any format of IC card can be used. As the card writer 91 and the card reader 92, those corresponding to the format of the IC card 90 are used. When NFC is used, for example, each type described above (a type, b type, f type, etc.) can be adopted.

Compared with the case where the remote control instruction unit 12 transmits the door lock key information and the engine starting relay control command information to the vehicle-mounted device 1 through the wireless communication network 30, in the case where the door lock key information and the engine starting relay control command information are written in the IC card 90, the door lock can be locked and unlocked promptly and the vehicle 2 can be set to the starting-enabled state quickly without depending on the communication status of the wireless communication network 30 even in a poor communication status. Further, when the vehicle-mounted device 1 is in the sleep mode, it may take about one hour in a bad case to switch the vehicle 2 to the starting-enabled state. However, by holding the IC card 90 over the card reader 92, the vehicle starting command can be transmitted directly to the vehicle-mounted device 1. Therefore, it is possible to quickly control the starting state of the vehicle 2 (for example, switching the vehicle 2 to the starting-enabled state and unlocking the door lock key of the vehicle 2) even when the vehicle-mounted device 1 is in the sleep mode.

Further, also in a system in which the vehicle-mounted device 1 includes the IC card reader 92 and the door lock key information and the engine starting relay control command can be input using the IC card 90, a means for communicating the door lock key information and the engine starting relay control command from the user terminal 32 to the vehicle-mounted device 1 by the short-range wireless means and a means for communicating the door lock key information and the engine starting relay control command to the vehicle-mounted device 1 via the remote control instruction unit 12 of the server 10 may be included. In this case, even in a case where the user loses the IC card 90 or leaves it at home or the like, the vehicle starting control can be performed by communicating with the vehicle-mounted device 1 using the user terminal 32. Furthermore, in a case where communication between the server 10 and the vehicle-mounted device 1 is established, if the user is authenticated and the reservation content is confirmed using another communication means to the server 10, by transmitting a locking command and an unlocking command to the vehicle-mounted device 1 via the server 10, the door lock can be locked and unlocked and the vehicle starting control can be performed. In this way, by being provided with a plurality of communication means, the locking and unlocking operation of the door lock and the vehicle starting control can be performed by the convenient means for users. Therefore, it is possible to provide a highly convenient system for users.

### [Second embodiment]

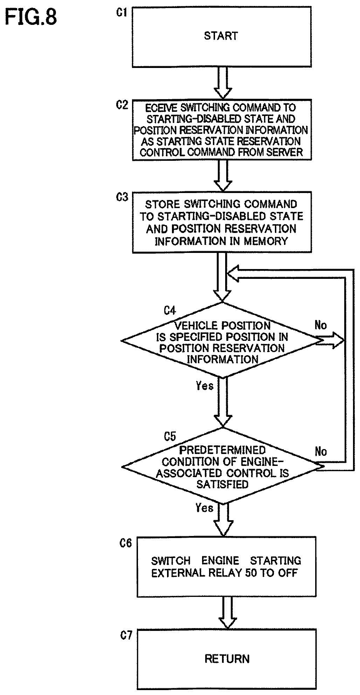

A vehicle remote control system, a vehicle-mounted device or a communication module, a vehicle, a server, a vehicle remote control method, a vehicle remote control program, and a storage medium according to the second embodiment of the present invention will be described with reference to FIG. 8. FIG. 8 shows a control flowchart of "switching to starting-disabled state" of A8 in FIG. 2 when switching position reservation information is sent from the server together with the switching control command from the starting-enabled state to the starting-disabled state as the starting state reservation control command for the vehicle-mounted device 1. The same configuration as in FIGS. 1 to 7 are denoted with the same reference signs and will not be further described. An example in which this control flowchart is executed in the vehicle-mounted device 1 will be described.

The control flowchart starts in C1 and the process proceeds to C2. In C2, as the starting state reservation control command, the switching position reservation information is received together with the switching control command from the starting-enabled state to the starting-disabled state, and the process proceeds to C3. In C3, as the starting state reservation control command, the switching position reservation information is stored in the memory 43 together with the switching control command from the starting-enabled state to the starting-disabled state, and the process proceeds to C4. In C4, it is determined whether or not the vehicle position is a position specified in the switching position reservation information by using the position information from the GPS 54 of the vehicle 2. As the switching position reservation information, the position registered as the registered parking position information described in the first embodiment may be specified. For example, in a case where a plurality of parking positions are registered as the registered parking position information, as the switching position reservation information, one or more of the plurality of parking positions can be specified.

If Yes in C4, the process proceeds to C5. In C5, as described in the first embodiment, it is determined whether or not the predetermined condition of the engine-associated control is satisfied. If Yes in C5, the process proceeds to C6. On the other hand, in the case of No in C4 or No in C5, the process returns again to the determination in C4 in order to execute the switching command to the starting-disabled state based on the switching position reservation information stored in the memory. In C6, the engine starting external relay 50 is controlled to be switched to OFF and the vehicle 2 is switched from the starting-enabled state to the starting-disabled state at the position specified in the switching position reservation information. Then, the process proceeds to C7, and returns at C7. The control for switching the vehicle 2 to the starting-disabled state in the present embodiment is not limited to the control for switching the engine starting external relay 50 to OFF. For example, the control in which the external relay 28 of the door lock actuator control circuit 56 is switched to the locking side, or the like is also included.

In a case where all the control flowcharts of C1 to C7 described here are executed in the vehicle-mounted device 1, the calculation on the server 10 can be simplified. That is to say, the server 10 can always transmit the control command for switching the vehicle from the starting-enabled state to the starting-disabled state as the starting state reservation control command to the vehicle-mounted device 1 without considering the position and the situation of the vehicle 2. The vehicle-mounted device 1 stores this control command in the memory 43, and when the vehicle 2 is in a safety state, for example, when the vehicle 2 is parked in a registered parking lot and the engine is turned off for more than X hours, the vehicle is switched to the starting-disabled state.

Further, even if the registered parking lot for the vehicle 2 is an area of poor communication condition, an underground parking lot, or the like, in which communication between the server 10 and the vehicle-mounted device 1 cannot be established, if the vehicle-mounted device 1 receives the switching command from the starting-enabled state to the starting-disabled state from the server 10 as the starting state reservation control command while traveling in a place where communication between the server 10 and the vehicle-mounted device 1 can be established, the vehicle 2 is switched to the starting-disabled state when parking safety in the registered parking lot (for example, when YES in C4 and C5). If communication with the vehicle-mounted device 1 cannot be established, the server 10 repeats communication from the server 10 at predetermined intervals until communication with the vehicle-mounted device 1 can be established. Therefore, while the vehicle 2 is traveling in a place where communication between the server 10 and the vehicle-mounted device 1 can be established, the server 10 can reliably transmit the starting state reservation control command to the vehicle-mounted device 1. As a result, the vehicle 2 can be switched from the starting-enabled state to the starting-disabled state even when a place where communication between the server 10 and the vehicle-mounted device 1 cannot be established is registered as a parking lot. Further, if the switching position reservation information is included as the starting state reservation control command together with the switching control command from the starting-enabled state to the starting-disabled state, the vehicle 2 can be switched from the starting-enabled state to the starting-disabled state at a place specified as the switching position reservation information by the server 10. The order of determinations of C4 and C5 can be exchanged.

If the control command transmitted from the server 10 to the vehicle-mounted device 1 is the control command for switching the vehicle 2 from the starting-disabled state to the starting-enabled state, the vehicle-mounted device 1 immediately controls to switch the vehicle 2 to the controllable state. The control flowchart at this time is the same as the control flowchart in FIG. 5 of the first embodiment. Further, even when communication between the server 10 and the vehicle-mounted device 1 cannot be established, for example, the first modification and the second modification of the first embodiment can be adopted as a method of switching the vehicle 2 from the starting-disabled state to the starting-enabled state. The control command for switching the vehicle 2 from the starting-disabled state to the starting-enabled state can also include the position reservation information as the starting reservation control command. For example, even when communication between the server 10 and the vehicle-mounted device 1 is not established, it is also possible to control the vehicle 2 to be switched to the starting-enabled state under the condition that the vehicle 2 is parked in a predetermined parking lot set in the position reservation information.

### [Third embodiment]

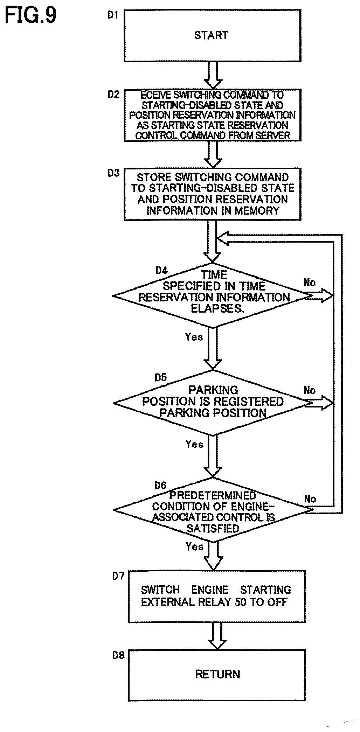

A vehicle remote control system, a vehicle-mounted device or a communication module, a vehicle, a server, a vehicle remote control method, a vehicle remote control program, and a storage medium according to the third embodiment of the present invention will be described with reference to FIG. 9. FIG. 9 shows a control flowchart of "switching to starting-disabled state" of A8 in FIG. 2 when the switching time reservation information is sent from the server 10 together with the switching control command from the starting-enabled state to the starting-disabled state as the starting state reservation control command for the vehicle-mounted device 1. The same configuration as in FIGS. 1 to 8 are denoted with the same reference signs and will not be further described. An example in which this control flowchart is executed in the vehicle-mounted device 1 will be described.

The control flowchart starts in D1 and the process proceeds to D2. In D2, as the starting state reservation control command, switching time reservation information is received together with the switching control command from the starting-enabled state to the starting-disabled state, and the process proceeds to D3. In D3, as the starting state reservation control command, the switching time reservation information is stored in the memory 43 together with the switching control command from the starting-enabled state to the starting-disabled state, and the process proceeds to D4. In D4, the current time, for example, time information from the GPS 54 of the vehicle 2 (for example, time information from the GPS 54 input from the GPS input/output unit 49) is compared with the switching time reservation information stored in the memory 43. Then, it is determined whether or not the current time has reached the time specified in the time reservation information for switching the vehicle 2 from the starting-enabled state to the starting-disabled state. The switching time reservation information is not limited to time, and may be, for example, an elapsed time based on predetermined vehicle information. Further, as a time measuring means of the vehicle-mounted device 1, the current time of the GPS 54 is illustrated to be used. However, the time measuring means is not limited thereto, and any timing means such as an appropriate timer means provided in the vehicle-mounted device 1 may be used.

If the determination in D4 is YES, the process proceeds to D5. In D5, it is determined whether or not the vehicle position is the parking position registered in the vehicle-mounted device 1 in advance by using the position information from the GPS 54 of the vehicle 2. Here, the parking position information that the user normally uses is registered in the memory 43 of the vehicle-mounted device 1. The parking position information is registered, for example, with a console that is connected to the console input/output 44, or by registering a registered parking position information, which is input to the user information management unit 14 from the user terminal 32, in the memory 43 of the vehicle-mounted device 1. As this parking position information, at least one parking position is registered. However, it is also possible to register not only one parking position but also two or more parking positions.

If Yes in D5, the process proceeds to D6. In D6, as described in the first embodiment, it is determined whether or not the predetermined condition of the engine-associated control is satisfied. If Yes in D6, the process proceeds to D7. On the other hand, in the case of No in D4, No in D5 or No in D6, the process returns again to the determination in D4 in order to execute the switching command to the starting-disabled state based on the switching time reservation information stored in the memory 43. In D7, the engine starting external relay 50 is controlled to be switched to OFF and the vehicle 2 is switched from the starting-enabled state to the starting-disabled state after the elapse of the time specified in the switching time reservation information. Then, the process proceeds to D8, and returns at D8. The control for switching the vehicle 2 to the starting-disabled state in the present embodiment is not limited to the control for switching the engine starting external relay 50 to OFF. For example, the control in which the external relay 28 of the door lock actuator control circuit 56 is switched to the locking side, or the like is also included.

In a case where all the control flowcharts of D1 to D8 described here are executed in the vehicle-mounted device 1, the calculation on the server 10 can be simplified. That is to say, the server 10 can always transmit the control command for switching the vehicle from the starting-enabled state to the starting-disabled state as the starting state reservation control command to the vehicle-mounted device 1 without considering the position and the situation of the vehicle 2. The vehicle-mounted device 1 stores this control command in the memory 43, and when the vehicle 2 is in a safety state, for example, when the vehicle 2 is parked in a registered parking lot and the engine is turned off for more than X hours, the vehicle is switched to the starting-disabled state.

Further, even if the registered parking lot for the vehicle 2 is, for example, an area of poor communication condition, an underground parking lot, or the like, in which communication between the server 10 and the vehicle-mounted device 1 cannot be established, if the vehicle-mounted device 1 receives the switching command from the starting-enabled state to the starting-disabled state from the server 10 as the starting state reservation control command while traveling in a place where communication between the server 10 and the vehicle-mounted device 1 can be established, the vehicle 2 is switched to the starting-disabled state when the specified time elapses and the vehicle 2 is parked safely in the registered parking lot (for example, when YES in D4, D5 and D6). If communication with the vehicle-mounted device 1 cannot be established, the server 10 repeats communication from the server 10 at predetermined intervals until communication with the vehicle-mounted device 1 can be established. Therefore, while the vehicle 2 is traveling in a place where communication between the server 10 and the vehicle-mounted device 1 can be established, the server 10 can reliably transmit the starting state reservation control command to the vehicle-mounted device 1. As a result, the vehicle 2 can be switched from the starting-enabled state to the starting-disabled state even when a place where communication between the server 10 and the vehicle-mounted device 1 cannot be established is registered as a parking lot. Further, if the switching time reservation information is included as the starting state reservation control command together with the switching control command from the starting-enabled state to the starting-disabled state, when the time specified as the switching time reservation information by the server 10 elapses, the vehicle 2 can be switched from the starting-enabled state to the starting-disabled state at the registered parking lot. The order of determinations of D4, D5 and D6 can be arbitrarily exchanged.

If the control command transmitted from the server 10 to the vehicle-mounted device 1 is the control command for switching the vehicle 2 from the starting-disabled state to the starting-enabled state, the vehicle-mounted device 1 immediately controls to switch the vehicle 2 to the controllable state. The control flowchart at this time is the same as the control flowchart in FIG. 5 of the first embodiment. Further, even when communication between the server 10 and the vehicle-mounted device 1 cannot be established, for example, the first modification and the second modification of the first embodiment can be adopted as a method of switching the vehicle 2 from the starting-disabled state to the starting-enabled state. The control command for switching the vehicle 2 from the starting-disabled state to the starting-enabled state can also include the time reservation information as the starting reservation control command. For example, even when communication between the server 10 and the vehicle-mounted device 1 is not established, it is also possible to control the vehicle 2 to be switched to the starting-enabled state under the condition that the time set in the time reservation information elapses.

### [Fourth embodiment]

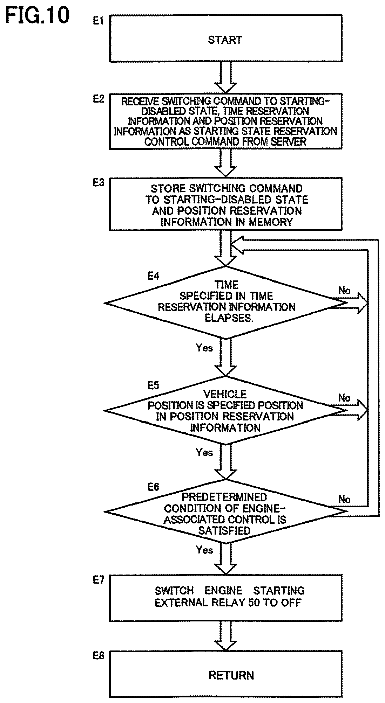

A vehicle remote control system, a vehicle-mounted device or a communication module, a vehicle, a server, a vehicle remote control method, a vehicle remote control program, and a storage medium according to the fourth embodiment of the present invention will be described with reference to FIG. 10. FIG. 10 shows a control flowchart of "switching to starting-disabled state" of A8 in FIG. 2 when the switching time reservation information and the switching position reservation information are sent from the server together with the switching control command from the starting-enabled state to the starting-disabled state as the starting state reservation control command for the vehicle-mounted device 1. The same configuration as in FIGS. 1 to 9 are denoted with the same reference signs and will not be further described. An example in which this control flowchart is executed in the vehicle-mounted device 1 will be described.

The control flowchart starts in E1 and the process proceeds to E2. In E2, as the starting state reservation control command, the switching time reservation information and the switching position reservation information are received together with the switching control command from the starting-enabled state to the starting-disabled state, and the process proceeds to E3. In E3, as the starting state reservation control command, the switching time reservation information and the switching position reservation information are stored in the memory 43 together with the switching control command from the starting-enabled state to the starting-disabled state, and the process proceeds to E4. In E4, the current time, for example, time information from the GPS 54 of the vehicle 2 (for example, time information from the GPS 54 input from the GPS input/output unit 49) is compared with the switching time reservation information stored in the memory 43. Then, it is determined whether or not the current time has reached the time specified in the time reservation information for switching the vehicle 2 from the starting-enabled state to the starting-disabled state. The switching time reservation information is not limited to time, and may be, for example, an elapsed time based on predetermined vehicle information. Further, as a time measuring means of the vehicle-mounted device 1, the current time of the GPS 54 is illustrated to be used. However, the time measuring means is not limited thereto, and any timing means such as an appropriate timer means provided in the vehicle-mounted device 1 may be used.

If the determination in E4 is YES, the process proceeds to E5. In E5, it is determined whether or not the vehicle position is a position specified in the switching position reservation information by using the position information from the GPS 54 of the vehicle 2. As the switching position reservation information, the position registered as the registered parking position information described in the first embodiment may be specified. For example, in a case where a plurality of parking positions are registered as the registered parking position information, as the switching position reservation information, one or more of the plurality of parking positions can be specified.

If Yes in E5, the process proceeds to E6. In E6, as described in the first embodiment, it is determined whether or not the predetermined condition of the engine-associated control is satisfied. If Yes in E6, the process proceeds to E7. On the other hand, in the case of No in E4, No in E5 or No in E6, the process returns again to the determination in E4 in order to execute the switching command to the starting-disabled state based on the switching time reservation information and the switching position reservation information stored in the memory 43. In E7, the engine starting external relay 50 is controlled to be switched to OFF and the vehicle 2 is switched from the starting-enabled state to the starting-disabled state after the elapse of the time specified in the switching time reservation information and at the position specified in the switching position reservation information. Then, the process proceeds to E8, and returns at E8. The control for switching the vehicle 2 to the starting-disabled state in the present embodiment is not limited to the control for switching the engine starting external relay 50 to OFF. For example, the control in which the external relay 28 of the door lock actuator control circuit 56 is switched to the locking side, or the like is also included.

In a case where all the control flowcharts of E1 to E8 described here are executed in the vehicle-mounted device 1, the calculation on the server 10 can be simplified. That is to say, the server 10 can always transmit the control command for switching the vehicle from the starting-enabled state to the starting-disabled state as the starting state reservation control command to the vehicle-mounted device 1 without considering the position and the situation of the vehicle 2. The vehicle-mounted device 1 stores this control command in the memory 43, and when the vehicle 2 is in a safety state, for example, when the time specified in the switching time reservation information elapses, the vehicle 2 is parked at the position specified in the switching position reservation information, and the engine is turned off for more than X hours, the vehicle is switched to the starting-disabled state.

Further, even if the registered parking lot for the vehicle 2 is an area of poor communication condition, an underground parking lot, or the like, in which communication between the server 10 and the vehicle-mounted device 1 cannot be established, if the vehicle-mounted device 1 receives the switching command from the starting-enabled state to the starting-disabled state from the server 10 as the starting state reservation control command while traveling in a place where communication between the server 10 and the vehicle-mounted device 1 can be established, the vehicle 2 is switched to the starting-disabled state when the specified time elapses and the vehicle 2 is parked safely in the specified position (for example, when YES in E4, E5 and E6). If communication with the vehicle-mounted device 1 cannot be established, the server 10 repeats communication from the server 10 at predetermined intervals until communication with the vehicle-mounted device 1 can be established. Therefore, while the vehicle 2 is traveling in a place where communication between the server 10 and the vehicle-mounted device 1 can be established, the server 10 can reliably transmit the starting state reservation control command to the vehicle-mounted device 1. As a result, the vehicle 2 can be switched from the starting-enabled state to the starting-disabled state even when a place where communication between the server 10 and the vehicle-mounted device 1 cannot be established is registered as a parking lot. Further, if the switching time reservation information and the switching position reservation information are included as the starting state reservation control command together with the switching control command from the starting-enabled state to the starting-disabled state, the vehicle 2 can be switched from the starting-enabled state to the starting-disabled state when the time specified as the switching time reservation information by the server 10 elapses and the vehicle 2 is at a place specified as the switching position reservation information by the server 10. The order of determinations of E4, E5 and E6 can be arbitrarily exchanged.

If the control command transmitted from the server 10 to the vehicle-mounted device 1 is the control command for switching the vehicle 2 from the starting-disabled state to the starting-enabled state, the vehicle-mounted device 1 immediately controls to switch the vehicle 2 to the controllable state. The control flowchart at this time is the same as the control flowchart in FIG. 5 of the first embodiment. Further, even when communication between the server 10 and the vehicle-mounted device 1 cannot be established, for example, the first modification and the second modification of the first embodiment can be adopted as a method of switching the vehicle 2 from the starting-disabled state to the starting-enabled state. The control command for switching the vehicle 2 from the starting-disabled state to the starting-enabled state can also include the time reservation information and the position reservation information as the starting reservation control command. For example, even when communication between the server 10 and the vehicle-mounted device 1 is not established, it is also possible to control the vehicle 2 to be switched to the starting-enabled state under the condition that the time set in the time reservation information elapses and the vehicle 2 is parked in a predetermined parking lot set in the position reservation information.

### [Fifth embodiment]

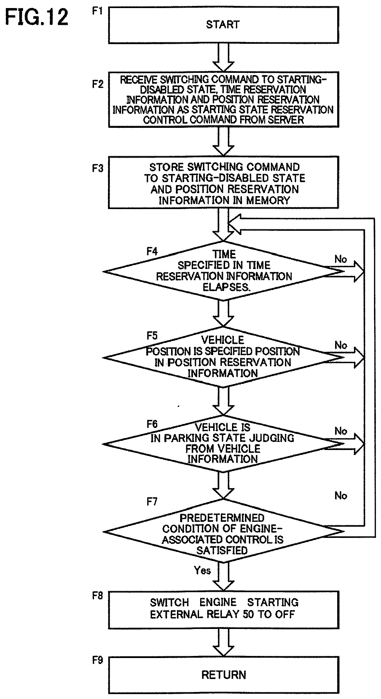

A vehicle remote control system, a vehicle-mounted device or a communication module, a vehicle, a server, a vehicle remote control method, a vehicle remote control program, and a storage medium according to the fifth embodiment of the present invention will be described with reference to FIGS. 11 and 12. FIG. 11 is an overall view of the vehicle remote control system according to the fifth embodiment. The same configuration as in FIGS. 1 to 10 are denoted with the same reference signs and will not be further described. In FIG. 11, it differs from the first to fourth embodiments in that a data communication module (hereinafter referred to as "DCM") is used instead of the vehicle-mounted device 1 on the vehicle 2 side, and this DCM21 is connected to each ECU 23 of the vehicle, a car navigation system 24, and the like.

As shown in FIG. 11, the vehicle remote control system of the fifth embodiment includes the server 10 and the DCM21 as a communication module provided in the vehicle 2. The vehicle 2 is provided with the DCM 21, a vehicle-mounted LAN (Local Area Network) 22, the ECU (Electronic Control Unit) 23, the car navigation system 24, and the like. Further, the server 10 and the DCM 21 of the vehicle 2 are connected by the wireless communication network 30 as in the first embodiment.

One DCM21 is installed as a genuine product in one vehicle 2. Here, the DCM21 is described as a genuine product, but the present invention is not limited thereto. For example, an add-on DCM21 can be installed in the vehicle 2. Here, the case where the DCM 21 is used as an example of the communication module will be described. However, the present invention is not limited thereto and another communication module capable of communicating with the server 10 can be used. For example, V2X communication. (Vehicle-to-vehicle communication and road-to-vehicle communication) and communication modules for communication using other dedicated lines are also included. The wireless communication network 30 may be of any type, for example, 2G, 3G, 4G, 5G, Wi-Fi (registered trademark), WiMAX (registered trademark), wireless LAN, beacon, Bluetooth (registered trademark), ZigBee (registered trademark).), V2X, other dedicated lines and the like.

The DCM 21 is connected to the ECU 23, the car navigation system 24 and the like via the vehicle-mounted LAN 22, and can collect vehicle information. In addition, for example, if the car navigation system 24 is retrofitted to the vehicle 2, the car navigation system 24 can be directly connected to the DCM 21. The DCM 21 transmits the vehicle information of the vehicle 2 to the server 10 via the wireless communication network 30, receives the starting state control command from the server 10 via the wireless communication network 30, and sends the control command to the ECU 23. As a result, the starting state of the power of the vehicle 2 is switched between the starting-enabled state and the starting-disabled state. In the case of an internal combustion engine vehicle, for example, the DCM 21 can switch the starting state between the starting-disabled state and the starting-enabled state by sending a control command to the engine ECU 23 in response to the starting state control command. The engine cannot be started in the starting-disabled state (this means that it prohibits the restart of the engine rather than it does not turn off the running engine), and in the starting-enabled state, the engine can be started.

Dozens of ECUs 23 are provided in the vehicle, and these ECUs 23 are connected to the DCM 21 via the vehicle-mounted LAN 22. The ECU 23 includes, for example, an engine ECU, an ADAS (advanced driver assistance system) ECU, a door lock ECU, a brake ECU, a steering ECU, an AT (automatic transmission) ECU, an air conditioner ECU, an immobilizer ECU, a lighting ECU, an airbag ECU, and the like. Each ECU is equipped with various sensors, for example, door opening/closing and locking, a seating sensor, a human sensor (or an infrared sensor), an in-vehicle camera, an outdoor camera (camera sensor), a lane detection sensor, an automatic driving or driving support sensor, a side brake sensor, a gear position sensor, a GPS (if the car navigation system 24 is installed, the GPS built into the car navigation system 24 can be used), GeoFense, a G sensor, a vehicle speed sensor, a tachometer, a steering sensor, a brake sensor, an accelerator sensor, various operation switch sensors or the like. Each ECU can collect information of these sensors and transmit the information to the DCM21 via the vehicle-mounted LAN 22. Vehicle Information is acquired from these sensors, and the DCM 21 grasps the vehicle information and transmits the information to the vehicle information acquisition unit 11 of the server 10, so that the server 10 can acquire various vehicle information.

The DCM 21 collects the information of various sensors from the ECU 23 in real time, at time when a specific event occurs, or periodically. The timing of transmitting data from the DCM 21 to the vehicle information acquisition unit 11 may be real-time, may be when a specific event occurs, may be periodic, or a combination thereof.

Similar to the first to fourth embodiments, the DCM21 of the present embodiment can switch the vehicle 2 between the starting-disabled state and the starting-enabled state in car lease, car rental, car sharing, or the like. The remote control instruction unit 12 of the server 10 sends the switching time reservation information and the switching position reservation information as the starting state reservation control command together with the switching control command from the starting-enabled state to the starting-disabled state to the DCM 21 via the transmission/reception unit 13 and the wireless communication network 30. In a case where the vehicle 2 is in a predetermined condition, the DCM21 can controls the vehicle 2 to be switched from the starting-enabled state to the starting-disabled state (for example, that is a control for turning off the engine starting external relay via each ECU, a locking control with an external relay 58 of the door lock actuator control circuit 56 via each ECU, or the like) based on the switching control command from the starting-enabled state to the starting-disabled state, the switching time reservation information, and the switching position reservation information as the starting state reservation control command received from the server 10.

The condition for the DCM 21 to switch the vehicle 2 from the starting-enabled state to the starting-disabled state based on the starting state control command is that, in addition to the predetermined conditions of the engine-associated control of the vehicle 2 described in the first embodiment, at least one of (a), (b) or (c) is satisfied. The conditions of (a), (b) and (c) are as follows.
(a) At least one of the followings or the like is satisfied. The followings are determinations based on the vehicle information from the vehicle-mounted sensor of the vehicle 2 acquired via a vehicle-mounted network 22.
   (a-1) The door of the vehicle 2 is locked.
   (a-2) No person is in the vehicle 2.
   (a-3) The side brake of the vehicle 2 is in the parking position.
   (a-4) No person is detected by the in-vehicle camera of the vehicle 2.
   (a-5) No person is detected by the human sensor of the vehicle 2. or
   (a-6) The predetermined lane is not detected by the vehicle-mounted sensor of the vehicle 2.
(b) At least one of the followings or the like is satisfied. The followings are determinations based on the position information from the GPS 54 of the vehicle 2 (or the GPS installed in the car navigation system 24).
   (b-1) Judging from the position information of the vehicle 2, the vehicle 2 is not stopped on a public road on the map.
   (b-2) Judging from the position information of the vehicle 2, the vehicle 2 is stopped at a predetermined parking lot on the map. or
   (b-3) Judging from the GeoFence, the vehicle 2 is stopped at a predetermined parking lot.
(c) At least one of the followings or the like is satisfied. The followings are determinations based on the time reservation information of the vehicle 2.
   (c-1) The time for switching the vehicle to the starting-disabled state has passed, or
   (c-2) The time based on the vehicle information for switching the vehicle to the starting-disabled state has passed.

The above condition (a) can be determined from the DCM21 based on the vehicle information. The above condition (b) can be specified from by server 10 with the switching position reservation information. Further, the above condition (c) can be specified by the server 10 with the switching time reservation information. Further, also in the present embodiment, the control flowchart of FIG. 2 in the first embodiment can be adopted.

FIG. 12 shows a control flowchart of "switching to starting-disabled state" of A8 in FIG. 2 when the switching time reservation information and the switching position reservation information are sent from the server 10 together with the switching control command from the starting-enabled state to the starting-disabled state as the starting state reservation control command for the DCM 21. The same configuration as in FIGS. 1 to 11 are denoted with the same reference signs and will not be further described. An example in which this control flowchart is executed in the DCM 21 will be described.

The control flowchart starts in F1 and the process proceeds to F2. In F2, as the starting state reservation control command, the switching time reservation information and the switching position reservation information are received together with the switching control command from the starting-enabled state to the starting-disabled state, and the process proceeds to F3. In F3, as the starting state reservation control command, the switching time reservation information and the switching position reservation information are stored in the memory of the DCM 21 together with the switching control command from the starting-enabled state to the starting-disabled state, and the process proceeds to F4. In F4, the current time, for example, time information from the GPS of the car navigation system 24 of the vehicle 2 is compared with the switching time reservation information stored in the memory of the DCM21. Then, it is determined whether or not the current time has reached the time specified in the time reservation information for switching the vehicle 2 from the starting-enabled state to the starting-disabled state. The switching time reservation information is not limited to time, and may be, for example, an elapsed time based on predetermined vehicle information. That is, the determination in F4 is as follows.
(c) At least one of the followings or the like is satisfied. The followings are determinations based on the time reservation information of the vehicle 2.
(c-1) The time for switching the vehicle to the starting-disabled state has passed, or
(c-2) The time based on the vehicle information for switching the vehicle to the starting-disabled state has passed.

Further, as a time measuring means of the vehicle-mounted device 1, the current time of the GPS 54 is illustrated to be used. However, the time measuring means is not limited thereto, and any timing means such as an appropriate timer means provided in the DCM 21 may be used.

If the determination in F4 is YES, the process proceeds to F5. In F5, it is determined whether or not the vehicle position is a position specified in the switching position reservation information by using the position information from the GPS in the car navigation system 24 of the vehicle 2. The determination in F5 is as follows. (b) At least one of the followings or the like is satisfied. The followings are determinations based on the position information from the GPS 54 of the vehicle 2 (or the GPS installed in the car navigation system 24).
(b-1) Judging from the position information of the vehicle 2, the vehicle 2 is not stopped on a public road on the map.
(b-2) Judging from the position information of the vehicle 2, the vehicle 2 is stopped at a predetermined parking lot on the map, or
(b-3) Judging from the GeoFence, the vehicle 2 is stopped at a predetermined parking lot.

As the switching position reservation information, the position registered as the registered parking position information described in the first embodiment may be specified. For example, in a case where a plurality of parking positions are registered as the registered parking position information, as the switching position reservation information, one or more of the plurality of parking positions can be specified.

If Yes in F5, the process proceeds to F6. In F6, the DCM 21 determines whether or not the vehicle 2 is in the parking state by using the vehicle information acquired from each ECU 23. The determination in F5 is one of the followings or the like.
(a-1) The door of the vehicle 2 is locked.
(a-2) No person is in the vehicle 2.
(a-3) The side brake of the vehicle 2 is in the parking position.
(a-4) No person is detected by the in-vehicle camera of the vehicle 2.
(a-5) No person is detected by the human sensor of the vehicle 2. or
(a-6) The predetermined lane is not detected by the vehicle-mounted sensor of the vehicle 2.

Here, the ECU 21 of the vehicle 2 is connected to sensors such as a door lock sensor, a seating sensor, an in-vehicle camera, a human sensor, a vehicle-mounted camera (for lane detection, etc.), a shift gear sensor (or a shift gear lever position sensor), and a parking brake sensor (or a parking brake lever position sensor).

If Yes in F6, the process proceeds to F7. In F7, as described in the first embodiment, it is determined whether or not the predetermined condition of the engine-associated control is satisfied. If Yes in F7, the process proceeds to F8. On the other hand, in the case of No in F4, No in F5, No in F6 or No in F7, the process returns again to the determination in F4 in order to execute the switching command to the starting-disabled state based on the switching time reservation information and the switching position reservation information stored in the memory of the DCM 21. In F8, the control for switching the vehicle 2 from the starting-enabled state to the starting-disabled state (for example, that is a control for turning off the engine starting external relay via each ECU, a locking control with an external relay 58 of the door lock actuator control circuit 56 via each ECU, or the like) is performed. Then, the vehicle 2 is switched from the starting-enabled state to the starting-disabled state after the elapse of the time specified in the switching time reservation information and at the position specified in the switching position reservation information. Then, the process proceeds to F9, and returns at F9.

In a case where all the control flowcharts of F1 to F9 described here are executed in the DCM 21, the calculation on the server 10 can be simplified. That is to say, the server 10 can always transmit the control command for switching the vehicle from the starting-enabled state to the starting-disabled state as the starting state reservation control command to the DCM 21 without considering the position and the situation of the vehicle 2. The DCM 21 stores this control command in the memory of the DCM 21, and when the vehicle 2 is in a safety state, for example, when the time specified in the switching time reservation information elapses, the vehicle 2 is parked at the position specified in the switching position reservation information, the vehicle 2 is in the parking state and the engine is turned off for more than X hours, the vehicle is switched to the starting-disabled state.

Further, even if the registered parking lot for the vehicle 2 is an area of poor communication condition, an underground parking lot, or the like, in which communication between the server 10 and the DCM 21 cannot be established, if the DCM 21 receives the switching command from the starting-enabled state to the starting-disabled state from the server 10 as the starting state reservation control command while traveling in a place where communication between the server 10 and the DCM 21 can be established, the vehicle 2 is switched to the starting-disabled state when the specified time elapses and the vehicle 2 is parked safely in the specified position (for example, when YES in F4, F5, F6 and F7). If communication with the DCM 21 cannot be established, the server 10 repeats communication from the server 10 at predetermined intervals until communication with the vehicle-mounted device 1 can be established. Therefore, while the vehicle 2 is traveling in a place where communication between the server 10 and the DCM 21 can be established, the server 10 can reliably transmit the starting state reservation control command to the DCM 21. As a result, the vehicle 2 can be switched from the starting-enabled state to the starting-disabled state even when a place where communication between the server 10 and the DCM 21 cannot be established is registered as a parking lot. Further, if the switching time reservation information and the switching position reservation information are included as the starting state reservation control command together with the switching control command from the starting-enabled state to the starting-disabled state, the vehicle 2 can be switched from the starting-enabled state to the starting-disabled state when the time specified as the switching time reservation information by the server 10 elapses, the vehicle is parked at a place specified as the switching position reservation information, the vehicle 2 is in the parking state, and the condition of the engine-associated control is satisfied. The order of determinations of F4, F5, F6 and F7 can be arbitrarily exchanged. Further, at least one of the determinations of F4, F5 or F6 can be omitted. If F4 is omitted, the time reservation information can be omitted, and if F5 is omitted, the position reservation information can also be omitted. Instead of the determination in F5, the same determination as that of B4 in the first embodiment may be performed.

If the control command transmitted from the server 10 to the DCM 21 is the control command for switching the vehicle 2 from the starting-disabled state to the starting-enabled state, the DCM 21 immediately controls to switch the vehicle 2 to the controllable state. The control flowchart at this time is the same as the control flowchart in FIG. 5 of the first embodiment. Further, even when communication between the server 10 and the DCM 21 cannot be established, for example, the same configuration as those in the first modification and the second modification of the first embodiment can be adopted as a method of switching the vehicle 2 from the starting-disabled state to the starting-enabled state. For example, if the first modification of the first embodiment is adopted in the present embodiment, a specific short-range wireless communication transmission/reception device may be incorporated in the DCM 21 and the user terminal 32, respectively, as in the first modification of the first embodiment. Further, for example, if the second modification of the first embodiment is adopted in the present embodiment, as in the second modification of the first embodiment, the vehicle starting command may be read with the card reader 92 of the DCM 21 by using the IC card 90 in which the vehicle starting command is written by the card writer 91. The control command for switching the vehicle 2 from the starting-disabled state to the starting-enabled state can also include the time reservation information and the position reservation information as the starting reservation control command. For example, even when communication between the server 10 and the DCM 21 is not established, it is also possible to control the vehicle 2 to be switched to the starting-enabled state under the condition that the time set in the time reservation information elapses and the vehicle 2 is parked in a predetermined parking lot set in the position reservation information.

The embodiments described above exemplify a vehicle remote control system, a vehicle-mounted device or a communication module, a vehicle, a server, a vehicle remote control method, a vehicle remote control program, and a storage medium for embodying the technical concept of the present invention. Therefore, the present invention is not limited thereto, and it is possible to make changes to each embodiment or each modification, or to combine all or part of each embodiment or each modification with each other. And it is equally applicable to other embodiments.

### [Reference Signs List]

- 1: vehicle-mounted device or communication module
- 2: vehicle
- 10: server
- 11: vehicle information acquisition unit
- 12: remote control instruction unit
- 13: transmission/reception unit
- 14: user information management unit
- 15: payment status monitoring unit
- 16: financial system
- 17: API
- 21: DCM
- 22: vehicle-mounted LAN
- 23: ECU
- 24: car navigation system
- 30: wireless communication network
- 31: manager terminal
- 32: user terminal
- 90: IC card
- 91: card writer
- 92: card reader

## Claims

1. A vehicle remote control system comprising:
a server for managing a starting state of a vehicle; and
a vehicle-mounted device or a communication module for controlling the starting state of the vehicle based on a control command that is provided from the server and controls the starting state of the vehicle, wherein
the control command includes at least a starting state reservation control command for switching between a starting-disabled state and a starting-enabled state of the vehicle, and
when the vehicle-mounted device or the communication module is provided with the control command from the server, if a predetermined condition regarding the starting state reservation control command is satisfied on the basis of vehicle information detected by a vehicle information detecting means, the vehicle-mounted device or the communication module switches the starting state of the vehicle.

2. The vehicle remote control system according to claim 1, wherein the starting state reservation control command includes at least one of
(2-1) a switching command from the starting-disabled state to the starting-enabled state,
(2-2) a switching command from the starting-enabled state to the starting-disabled state,
(2-3) position reservation information about a position of the vehicle where the starting state is to be switched, or
(2-4) time reservation information about time when the starting state is to be switched.

3. The vehicle remote control system according to claim 1 or 2, wherein the server is connected via a predetermined interface of a financial system.

4. The vehicle remote control system according to any one of claims 1 to 3, wherein the server can communicate the control command for controlling the starting state of the vehicle with at least one of
(4-1) the vehicle-mounted device or the communication module,
(4-2) the mobile terminal, or
(4-3) the IC card, and
the mobile terminal and/or the IC card can communicate the control command with the vehicle-mounted device or the communication module.

5. The vehicle remote control system according to any one of claims 1 to 4, wherein the starting state to be controlled of the vehicle includes at least one of a door lock state of the vehicle, an engine starting state of the vehicle, a state of an immobilizer of the vehicle, or a state of a push button for starting the vehicle.

6. The vehicle remote control system according to any one of claims 1 to 5, wherein the vehicle-mounted device or the communication module controls the starting state of the vehicle based on at least elapsed time from a change of on/off state of vehicle power, which is detected by the vehicle information detecting means.

7. The vehicle remote control system according to any one of claims 1 to 6, wherein the vehicle-mounted device controls the starting state of the vehicle by controlling an external relay.

8. A vehicle-mounted device or a communication module for controlling a starting state of a vehicle based on a control command that is provided from a server for managing the starting state of the vehicle and controls the starting state of the vehicle, wherein,
the control command includes at least a starting state reservation control command for switching between a starting-disabled state and a starting-enabled state of the vehicle, and
when the vehicle-mounted device or the communication module is provided with the control command from the server, if a predetermined condition regarding the starting state reservation control command is satisfied on the basis of vehicle information detected by a vehicle information detecting means, the vehicle-mounted device or the communication module switches the starting state of the vehicle.

9. The vehicle-mounted device or the communication module according to claim 8, wherein the starting state reservation control command includes at least one of (9-1) a switching command from the starting-disabled state to the starting-enabled state,
(9-2) a switching command from the starting-enabled state to the starting-disabled state,
(9-3) position reservation information about a position of the vehicle where the starting state is to be switched, or
(9-4) time reservation information about time when the starting state is to be switched.

10. The vehicle-mounted device or the communication module according to claim 8 or 9, wherein the server is connected via a predetermined interface of a financial system.

11. The vehicle-mounted device or the communication module according to any one of claims 8 to 10, wherein the server can communicate the control command for controlling the starting state of the vehicle with at least one of
(11-1) the vehicle-mounted device or the communication module,
(11-2) the mobile terminal, or
(11-3) the IC card, and
the vehicle-mounted device or the communication module can communicate the control command with the mobile terminal and/or the IC card.

12. The vehicle-mounted device or the communication module according to any one of claims 8 to 11, wherein the starting state to be controlled of the vehicle includes at least one of a door lock state of the vehicle, an engine starting state of the vehicle, a state of an immobilizer of the vehicle, or a state of a push button for starting the vehicle.

13. The vehicle-mounted device or the communication module according to any one of claims 8 to 12, wherein the vehicle-mounted device or the communication module controls the starting state of the vehicle based on at least elapsed time from a change of on/off state of vehicle power, which is detected by the vehicle information detecting means.

14. The vehicle-mounted device according to any one of claims 8 to 13, wherein the vehicle-mounted device controls the starting state of the vehicle by controlling an external relay.

15. A vehicle includes the vehicle-mounted device or the communication module according to any one of claims 8 to 14.

16. A server that provides a vehicle-mounted device or a communication module for controlling a starting state of a vehicle with a control command for controlling the starting state of the vehicle and manages the starting state of the vehicle, wherein
the control command includes at least a starting state reservation control command for switching between a starting-disabled state and a starting-enabled state of the vehicle, and
when the vehicle-mounted device or the communication module is provided with the control command from the server, if a predetermined condition regarding the starting state reservation control command is satisfied on the basis of vehicle information detected by a vehicle information detecting means, the vehicle-mounted device or the communication module switches the starting state of the vehicle.

17. A vehicle remote control method, wherein the method comprises:
a means for controlling a starting state of a vehicle based on a control command that is provided from a server for managing the starting state of the vehicle, controls the starting state of the vehicle, and includes at least a starting state reservation control command for switching between a starting-disabled state and a starting-enabled state of the vehicle; and
a vehicle information detecting means for detecting vehicle information, and
when the means for controlling the starting state of the vehicle is provided with the control command from the server, if a predetermined condition regarding the starting state reservation control command is satisfied on the basis of the vehicle information, the means for controlling the starting state of the vehicle switches the starting state of the vehicle.

18. A vehicle remote control program for operating each of the means according to claim 17 with a computer.

19. A storage medium storing the vehicle remote control program according to claim 18.
